# EUROPEAN PATENT SPECIFICATION

(11) **EP 2 840 725 B1**
(45) Date of publication and mention of the grant of the patent: **14.06.2017**
(21) Application number: 12891165.8
(22) Date of filing: 31.12.2012
(51) Int. Cl.: H04B 10/00, G06F 13/40, G06F 13/42

(54) **RECEIVING END DETECTION METHOD, DETECTION CIRCUIT, OPTICAL MODULE AND SYSTEM**
EMPFANGSSEITIGES DETEKTIONSVERFAHREN, DETEKTIONSSCHALTUNG, OPTISCHES MODUL UND SYSTEM
PROCÉDÉ DE DÉTECTION D'EXTRÉMITÉ DE RÉCEPTION, CIRCUIT DE DÉTECTION, MODULE OPTIQUE ET SYSTÈME

(43) Date of publication of application: 25.02.2015
(73) Proprietor: Huawei Technologies Co., Ltd., Longgang District Shenzhen, Guangdong 518129 (CN)
(72) Inventor: ZHANG, Zhong, Shenzhen Guangdong 518129 (CN)
(74) Representative: Kreuz, Georg Maria
(86) International application number: PCT/CN2012/087967
(87) International publication number: WO 2014/101158

(56) References cited:
- WO-A1-2009/137418
- CN-A- 101 882 956
- CN-A- 101 887 151
- US-A1- 2005 105 861
- US-A1- 2006 285 803
- US-A1- 2011 255 873
- US-A1- 2012 008 938
- US-A1- 2012 106 949

## Description

### TECHNICAL FIELD

The present invention relates to the field of optical communications, and in particular, to a method for detecting a receive end, a detection circuit, an optical module, and a system.

### BACKGROUND

The PCI-E (Peripheral Component Interconnect Express, peripheral component interconnect express) standard is a new generation of bus technologies proposed by the Intel Corporation, and is widely used in personal computers, servers, and data centers. Currently, the PCI-E standard supports only electrical transmission but does not support optical transmission. However, due to a short distance of electrical transmission, applications of a PCI-E bus are greatly restricted. The optical transmission can well resolve this problem. Therefore, it is an inevitable trend during development of the PCI-E bus to support optical transmission.

To implement support of optical transmission by PCI-E, a function of detecting a receive end is one of key problems that need to be resolved. The so-called "function of detecting a receive end" refers to a mechanism for a PCI-E transmit end to detect, after completing power-on initialization, whether a PCI-E receive end is in position. An existing method adopted for a PCI-E bus to detect a receive end by using an electrical connection mainly includes: a PCI-E transmit end sends a common-mode voltage higher than an initial voltage to a PCI-E receive end by using an electrical connection, and then determines whether the PCI-E receive end is in position by detecting whether a time duration for a voltage across two differential lines of the PCI-E transmit end to rise from the initial voltage to the common-mode voltage exceeds a threshold, thereby implementing in-position detection on the PCI-E receive end.

During the implementation of the present invention, the inventor finds that the prior art has at least the following problem: in a process of implementing support of optical transmission by a PCI-E bus, because a PCI-E transmit end and a PCI-E receive end are connected by using an optical module and an optical fiber, but a common-mode signal cannot be transmitted to a peer end in optical transmission, a change of rising of an initial voltage to a common-mode voltage cannot by perceived through optical transmission, so that the PCI-E transmit end cannot implement a function of detecting a receive end.

US 2012/0106949 A1 relates to an optical transceiver module adapted to a link device includes a connection unit, a driving unit and optical transmitting and receiving units.

US 2012/0008938 A1 relates to a data transmission system including a first link partner and an optical transceiver unit.

### SUMMARY

To resolve the problem that receive end detection cannot be implemented by using a conventional method in a PCI-E bus that supports optical cable transmission, the present invention provides a method for detecting a receive end, a detection circuit, an optical module, and a system. The technical solutions are as follows:

According to a first aspect, a method for detecting a receive end is provided, where the method includes:
transmitting a first detection code pattern to a Peripheral Component Interconnect Express, PCI-E, receive end through optical transmission, so that after receiving the first detection code pattern, the PCI-E receive end feeds back a second detection code pattern through the optical transmission;
detecting whether the second detection code pattern fed back by the PCI-E receive end through the optical transmission is received; and
determining that the PCI-E receive end is in position if a detection result is that the second detection code pattern fed back by the PCI-E receive end through the optical transmission is received;
where both the first detection code pattern and the second detection code pattern are differential signals.

In a first possible implementation manner of the first aspect, before the transmitting a first detection code pattern to a PCI-E receive end through optical transmission, the method further includes:
detecting whether a current link machine state switches from a Detect.Quiet sub-state into a Detect.Active sub-state; and
the transmitting a first detection code pattern to a PCI-E receive end through optical transmission includes:
   transmitting the first detection code pattern to the PCI-E receive end through the optical transmission at a predetermined time interval after it is detected that the current link machine state switches from the Detect.Quiet sub-state into the Detect.Active sub-state.

With reference to the first aspect or the first possible implementation manner of the first aspect, in a second possible implementation manner, the detecting whether the second detection code pattern fed back by the PCI-E receive end through the optical transmission is received includes:
within a predetermined time period starting from the transmission of the first detection code pattern, detecting whether the second detection code pattern fed back by the PCI-E receive end through the optical transmission is received.

With reference to the first aspect, or the first or second possible implementation manner of the first aspect, in a third possible implementation manner, after the determining that the PCI-E receive end is in position, the method further includes:
switching the current link machine state from the Detect.Active sub-state into a polling state.

With reference to the first aspect, or the first, second, or third possible implementation manner of the first aspect, in a fourth possible implementation manner, the first detection code pattern is the same as or different from the second detection code pattern, and frequencies of the first detection code pattern and the second detection code pattern are higher than a predetermined frequency threshold.

According to a second aspect, a method for detecting a Peripheral Component Interconnect Express, PCI-E, receive end is provided, where the method includes:
receiving a first detection code pattern transmitted by a PCI-E transmit end through optical transmission; and
feeding back a second detection code pattern to the PCI-E transmit end through the optical transmission after the first detection code pattern transmitted by the PCI-E transmit end through the optical transmission is received, so that the PCI-E transmit end determines, according to the second detection code pattern, that the PCI-E receive end is in position;
where both the first detection code pattern and the second detection code pattern are differential signals.

In a first possible implementation manner of the second aspect, before the feeding back a second detection code pattern to the PCI-E transmit end through the optical transmission, the method further includes:
generating the second detection code pattern that is the same as or different from the first detection code pattern.

According to a third aspect, a method for detecting a receive end is provided, where the method includes:
transmitting a first predetermined signal to a second detection circuit through optical transmission, so that the second detection circuit detects, after receiving the first predetermined signal and by using an electrical connection, whether a Peripheral Component Interconnect Express, PCI-E, receive end is in position, and feeds back a second predetermined signal through the optical transmission if it is detected that the PCI-E receive end is in position;
detecting whether the second predetermined signal fed back by the second detection circuit through the optical transmission is received; and
if a detection result is that the second predetermined signal fed back by the second detection circuit through the optical transmission is received, switching a resistor network connected to two terminals of a PCI-E transmit end separately from an OFF state into an ON state, so that the resistor network and capacitors at the two terminals of the PCI-E transmit end form an equivalent resistor-capacitor, RC, charging circuit, and then the PCI-E transmit end determines, according to the equivalent RC charging circuit, that the PCI-E receive end is in position;
where both the first predetermined signal and the second predetermined signal are differential signals.

In a first possible implementation manner of the third aspect, before the transmitting a first predetermined signal to a second detection circuit through optical transmission, the method further includes:
detecting, by using an electrical connection, whether the PCI-E transmit end is performing PCI-E receive end detection; and
transmitting the first predetermined signal to the second detection circuit through the optical transmission if it is detected that the PCI-E transmit end is performing the PCI-E receive end detection.

With reference to the first possible implementation manner of the third aspect, in a second possible implementation manner, the detecting, by using an electrical connection, whether the PCI-E transmit end is performing PCI-E receive end detection includes:
detecting whether an amplitude of a differential signal output by the two terminals of the PCI-E transmit end is less than a first threshold, and whether a positive transition, an amplitude of which is greater than a second threshold, exists in a common-mode voltage output by the two terminals within a predetermined time period.

With reference to the third aspect, or the first or second possible implementation manner of the third aspect, in a third possible implementation manner, after the switching a resistor network connected to two terminals of a PCI-E transmit end separately from an OFF state into an ON state, the method further includes:
switching the resistor network connected to the two terminals of the PCI-E transmit end separately from the ON state back into the OFF state after a predetermined time period starting from a time point when the resistor network switches from the OFF state into the ON state.

According to a fourth aspect, a method for detecting a receive end is provided, where the method includes:
receiving a first predetermined signal transmitted by a first detection circuit through optical transmission;
detecting, after the first predetermined signal is received and by using an electrical connection, whether a Peripheral Component Interconnect Express, PCI-E, receive end is in position; and
if it is detected that the PCI-E receive end is in position, feeding back a second predetermined signal through the optical transmission, so that the first detection circuit determines, according to the second predetermined signal, to switch a resistor network connected to two terminals of a PCI-E transmit end separately from an OFF state into an ON state, the resistor network and capacitors at the two terminals of the PCI-E transmit end form an equivalent resistor-capacitor, RC, charging circuit, and then the PCI-E transmit end determines, according to the equivalent RC charging circuit, that the receive end is in position;
where both the first predetermined signal and the second predetermined signal are differential signals.

In a first possible implementation manner of the fourth aspect, the detecting, by using an electrical connection, whether a PCI-E receive end is in position includes:
transmitting a common-mode voltage by using two terminals connected to the PCI-E receive end, where the common-mode voltage is higher than an initial voltage; and
detecting whether a time duration for a voltage across the two terminals connected to the PCI-E receive end to rise from the initial voltage to the common-mode voltage is greater than a predetermined threshold.

According to a fifth aspect, a transmit end is provided, where the transmit end includes:
a code pattern transmit module, configured to transmit a first detection code pattern to a Peripheral Component Interconnect Express, PCI-E, receive end through optical transmission, so that after receiving the first detection code pattern, the PCI-E receive end feeds back a second detection code pattern through the optical transmission;
a reception detection module, configured to detect whether the second detection code pattern fed back by the PCI-E receive end through the optical transmission is received; and
an in-position determining module, configured to determine that the PCI-E receive end is in position if a detection result of the reception detection module is that the second detection code pattern fed back by the PCI-E receive end through the optical transmission is received;
where both the first detection code pattern and the second detection code pattern are differential signals.

In a first possible implementation manner of the fifth aspect, the transmit end further includes:
a state detection module, where:
   the state detection module is configured to detect whether a current link machine state switches from a Detect.Quiet sub-state into a Detect.Active sub-state; and
   the code pattern transmit module is specifically configured to transmit the first detection code pattern to the PCI-E receive end at a predetermined time interval after the state detection module detects that the current link machine state switches from the Detect.Quiet sub-state into the Detect.Active sub-state.

With reference to the fifth aspect or the first possible implementation manner of the fifth aspect, in a second possible implementation manner, the reception detection module is specifically configured to: within a predetermined time period starting from the transmission of the first detection code pattern by the code pattern transmit module, detect whether the second detection code pattern fed back by the PCI-E receive end through the optical transmission is received.

With reference to the fifth aspect or the first or second possible implementation manner of the fifth aspect, in a third possible implementation manner, the transmit end further includes a state switching module, where:
the state switching module is configured to switch the current link machine state from the Detect.Active sub-state into a polling state after the in-position determining module determines that the PCI-E receive end is in position.

With reference to the fifth aspect or the first, second, or third possible implementation manner of the fifth aspect, in a fourth possible implementation manner, the first detection code pattern transmitted by the code pattern transmit module is the same as or different from the second detection code pattern detected by the reception detection module, and frequencies of the first detection code pattern and the second detection code pattern are higher than a predetermined frequency threshold.

According to a sixth aspect, a Peripheral Component Interconnect Express, PCI-E, receive end is provided, where the PCI-E receive end includes:
a code pattern receive module, configured to receive a first detection code pattern transmitted by a PCI-E transmit end through optical transmission; and
a code pattern feedback module, configured to feed back a second detection code pattern to the PCI-E transmit end through the optical transmission after the code pattern receive module receives the first detection code pattern transmitted by the PCI-E transmit end through the optical transmission, so that the PCI-E transmit end determines, according to the second detection code pattern, that the PCI-E receive end is in position;
where both the first detection code pattern and the second detection code pattern are differential signals.

In a first possible implementation manner of the sixth aspect, the PCI-E receive end further includes a code pattern generating module, where:
the code pattern generating module is configured to generate the second detection code pattern that is the same as or different from the first detection code pattern received by the code pattern receive module.

According to a seventh aspect, a first detection circuit is provided, where the circuit includes:
a signal transmit module, configured to transmit a first predetermined signal to a second detection circuit through optical transmission, so that the second detection circuit detects, after receiving the first predetermined signal and by using an electrical connection, whether a Peripheral Component Interconnect Express, PCI-E, receive end is in position, and feeds back a second predetermined signal through the optical transmission if it is detected that the PCI-E receive end is in position;
a feedback detection module, configured to detect whether the second predetermined signal fed back by the second detection circuit through the optical transmission is received; and
a circuit switching module, configured to: if a detection result of the feedback detection module is that the second predetermined signal fed back by the second detection circuit through the optical transmission is received, switch a resistor network connected to two terminals of a PCI-E transmit end separately from an OFF state into an ON state, so that the resistor network and capacitors at the two terminals of the transmit end form an equivalent resistor-capacitor, RC, charging circuit, and then the PCI-E transmit end determines, according to the equivalent RC charging circuit, that the PCI-E receive end is in position;
where both the first predetermined signal and the second predetermined signal are differential signals.

In a first possible implementation of the seventh aspect, the first detection circuit further includes a transmit end detection module, where:
the transmit end detection module is configured to detect, by using an electrical connection, whether the PCI-E transmit end is performing PCI-E receive end detection; and
the signal transmit module is configured to transmit the first predetermined signal to the second detection circuit through the optical transmission if the transmit end detection module detects that the PCI-E transmit end is performing the PCI-E receive end detection.

With reference to the first possible implementation manner of the seventh aspect, in a second possible implementation manner, the transmit end detection module is specifically configured to detect whether an amplitude of a differential signal output by the two terminals of the PCI-E transmit end is less than a first threshold, and whether a positive transition, an amplitude of which is greater than a second threshold, exists in a common-mode voltage output by the two terminals within a predetermined time period.

With reference to the seventh aspect, or the first or second possible implementation manner of the seventh aspect, in a third possible implementation manner, the circuit switching module is further configured to switch the resistor network connected to the two terminals of the PCI-E transmit end separately from the ON state back into the OFF state after a predetermined time period starting from a time point when the resistor network switches from the OFF state into the ON state.

According to an eighth aspect, a second detection circuit is provided, where the circuit includes:
a signal receive module, configured to receive a first predetermined signal transmitted by a first detection circuit through optical transmission;
an in-position detection module, configured to: after the signal receive module receives the first predetermined signal, detect, by using an electrical connection, whether a Peripheral Component Interconnect Express, PCI-E, receive end is in position; and
a signal feedback module, configured to: if the in-position detection module detects that the PCI-E receive end is in position, feed back a second predetermined signal through the optical transmission, so that the first detection circuit determines, according to the second predetermined signal, to switch a resistor network connected to two terminals of a PCI-E transmit end separately from an OFF state into an ON state, the resistor network and capacitors at the two terminals of the PCI-E transmit end form an equivalent resistor-capacitor, RC, charging circuit, and then the PCI-E transmit end determines, according to the equivalent RC charging circuit, that the PCI-E receive end is in position;
where both the first predetermined signal and the second predetermined signal are differential signals.

In a first possible implementation manner of the eighth aspect, the in-position detection module includes a common-mode transmitting unit and a time detecting unit, where:
the common-mode transmitting unit is configured to transmit a common-mode voltage by using two terminals connected to the PCI-E receive end, where the common-mode voltage is higher than an initial voltage; and
the time detecting unit is configured to detect whether a time duration for a voltage across the two terminals connected to the PCI-E receive end to rise from the initial voltage to the common-mode voltage transmitted by the common-mode transmitting unit is greater than a predetermined threshold.

According to a ninth aspect, a transmit end is provided, where the transmit end includes:
a transmitter, a receiver, a code pattern generating circuit, a code pattern detection circuit, and a controller, where:
   the transmitter is configured to transmit a first detection code pattern generated by the code pattern generating circuit to a Peripheral Component Interconnect Express, PCI-E, receive end through optical transmission, so that after receiving the first detection code pattern, the PCI-E receive end feeds back a second detection code pattern through the optical transmission;
   the code pattern detection circuit is configured to detect whether the receiver receives the second detection code pattern fed back by the PCI-E receive end through the optical transmission; and
   the controller is configured to determine that the PCI-E receive end is in position if a detection result of the code pattern detection circuit is that the receiver receives the second detection code pattern fed back by the PCI-E receive end through the optical transmission;
where both the first detection code pattern and the second detection code pattern are differential signals.

In a first possible implementation manner of the ninth aspect, the controller is further configured to detect whether a current link machine state switches from a Detect.Quiet sub-state into a Detect.Active sub-state; and
the transmitter is specifically configured to transmit the first detection code pattern generated by the code pattern generating circuit to the PCI-E receive end at a predetermined time interval after the controller detects that the current link machine state switches from the Detect.Quiet sub-state into the Detect.Active sub-state.

With reference to the ninth aspect or the first possible implementation manner of the ninth aspect, in a second possible implementation manner, the transmit end further includes a timer, where:
the timer is configured to time a predetermined time period after the transmitter transmits the first detection code pattern generated by the code pattern generating circuit; and
the code pattern detection circuit is configured to: within the predetermined time period timed by the timer, detect whether the receiver receives the second detection code pattern fed back by the PCI-E receive end through the optical transmission.

With reference to the ninth aspect, or the first or second possible implementation manner of the ninth aspect, in a third possible implementation manner, the controller is further configured to switch the current link machine state from the Detect.Active sub-state into a polling state after it is determined that the PCI-E receive end is in position.

With reference to the ninth aspect, or the first, second, or third possible implementation manner of the ninth aspect, in a fourth possible implementation manner, the first detection code pattern generated by the code pattern generating circuit is the same as or different from the second detection code pattern received by the receiver, and frequencies of the first detection code pattern and the second detection code pattern are higher than a predetermined frequency threshold.

According to a tenth aspect, a receive end is provided, where the receive end includes:
a receiver, a code pattern detection circuit, a code pattern generating circuit, a transmitter, and a controller, where:
   the receiver is configured to receive a first detection code pattern transmitted by a Peripheral Component Interconnect Express, PCI-E, transmit end through optical transmission; and
   the controller is configured to: after the code pattern detection circuit detects that the receiver receives the first detection code pattern transmitted by the PCI-E transmit end through the optical transmission, control the transmitter to feed back, through the optical transmission, a second detection code pattern generated by the code pattern generating circuit to the PCI-E transmit end, so that the PCI-E transmit end determines, according to the second detection code pattern, that the PCI-E receive end is in position;
where both the first detection code pattern and the second detection code pattern are differential signals.

In a first possible implementation manner of the tenth aspect, the code pattern generating circuit is configured to generate the second detection code pattern that is the same as or different from the first detection code pattern received by the receiver.

According to an eleventh aspect, a first detection circuit is provided, where the first detection circuit includes:
a transmitter, a receiver, a controller, and a resistor network, where:
   the transmitter is configured to transmit a first predetermined signal to a second detection circuit through optical transmission, so that the second detection circuit detects, after receiving the first predetermined signal and by using an electrical connection, whether a Peripheral Component Interconnect Express, PCI-E, receive end is in position, and feeds back a second predetermined signal through the optical transmission if it is detected that the PCI-E receive end is in position;
   the controller is configured to detect whether the receiver receives the second predetermined signal fed back by the second detection circuit through the optical transmission; and
   the controller is further configured to: if a detection result is that the receiver receives the second predetermined signal fed back by the second detection circuit through the optical transmission, switch a resistor network connected to two terminals of a PCI-E transmit end separately from an OFF state into an ON state, so that the resistor network and capacitors at the two terminals of the PCI-E transmit end form an equivalent resistor-capacitor, RC, charging circuit, and then the PCI-E transmit end determines, according to the equivalent RC charging circuit, that the PCI-E receive end is in position;
where both the first predetermined signal and the second predetermined signal are differential signals.

In a first possible implementation of the eleventh aspect, the first detection circuit further includes a state identifying circuit, where:
the state identifying circuit is configured to detect, by using an electrical connection, whether the PCI-E transmit end is performing PCI-E receive end detection; and
the transmitter is configured to transmit the first predetermined signal to the second detection circuit through the optical transmission if the state identifying circuit detects that the PCI-E transmit end is performing the PCI-E receive end detection.

With reference to the first possible implementation manner of the eleventh aspect, in a second possible implementation manner, the state identifying circuit is specifically configured to detect whether an amplitude of a differential signal output by the two terminals of the PCI-E transmit end is less than a first threshold, and whether a positive transition, an amplitude of which is greater than a second threshold, exists in a common-mode voltage output by the two terminals within a predetermined time period.

With reference to the eleventh aspect or the first or second possible implementation manner of the eleventh aspect, in a third possible implementation manner, the first detection circuit further includes a timer, where:
the timer is configured to time a predetermined time period after the controller switches the resistor network from the OFF state into the ON state; and
the controller is further configured to switch the resistor network connected to the two terminals of the PCI-E transmit end separately from the ON state back into the OFF state after the predetermined time period timed by the timer.

According to a twelfth aspect, a second detection circuit is provided, where the circuit includes:
a receiver, a receive end detection circuit, a controller, and a transmitter, where:
   the receiver is configured to receive a first predetermined signal transmitted by a first detection circuit through optical transmission;
   the receive end detection circuit is configured to: after the receiver receives the first predetermined signal, detect, by using an electrical connection, whether a PCI-E receive end is in position; and
   the controller is configured to: if the receive end detection circuit detects that the PCI-E receive end is in position, control the transmitter to feed back a second predetermined signal through the optical transmission, so that the first detection circuit determines, according to the second predetermined signal, to switch a resistor network connected to two terminals of a PCI-E transmit end separately from an OFF state into an ON state, the resistor network and capacitors at the two terminals of the PCI-E transmit end form an equivalent resistor-capacitor, RC, charging circuit, and then the PCI-E transmit end determines, according to the equivalent RC charging circuit, that the PCI-E receive end is in position;
   where both the first predetermined signal and the second predetermined signal are differential signals.

In a first possible implementation of the twelfth aspect, the receive end detection circuit includes:
a common-mode transmitter sub-circuit and a time detection sub-circuit, where:
   the common-mode transmitter sub-circuit is configured to transmit a common-mode voltage by using two terminals connected to the PCI-E receive end, where the common-mode voltage is higher than an initial voltage; and
   the time detection sub-circuit is configured to detect whether a time duration for a voltage across the two terminals connected to the PCI-E receive end to rise from the initial voltage to the common-mode voltage transmitted by the common-mode transmitter sub-circuit is greater than a predetermined threshold.

According to a thirteenth aspect, an optical module is provided, where the first detection circuit as described in the seventh aspect, various possible implementation manners of the seventh aspect, the eleventh aspect, or various possible implementation manners of the eleventh aspect, and/or, the second detection circuit as described in the eighth aspect, various possible implementation manners of the eighth aspect, the twelfth aspect, or various possible implementation manners of the twelfth aspect are integrated into the optical module.

According to a fourteenth aspect, a bus system is provided and includes a transmit end as described in the fifth aspect, various possible implementation manners of the fifth aspect, the ninth aspect, or various possible implementation manners of the ninth aspect, and a receive end as described in the sixth aspect, various possible implementation manners of the sixth aspect, the tenth aspect, or various possible implementation manners of the tenth aspect;
where the transmit end and the receive end are connected to each other by using an optical module and an optical cable.

According to a fifteenth aspect, a bus system is provided and includes a transmit end, a first detection circuit connected to the transmit end, a first optical module connected to the first detection circuit, a second optical module connected to the first optical module by using an optical cable, a second detection circuit connected to the second optical module, and a receive end connected to the second detection circuit;
where the first detection circuit is a first detection circuit described in the seventh aspect, various possible implementation manners of the seventh aspect, the eleventh aspect, or various possible implementation manners of the eleventh aspect; and
the second detection circuit is a second detection circuit described in the eighth aspect, various possible implementation manners of the eighth aspect, the twelfth aspect, or various possible implementation manners of the twelfth aspect.

According to a sixteenth aspect, a bus system is provided and includes a transmit end, a first optical module connected to the transmit end, a second optical module connected to the first optical module by using an optical cable, and a receive end connected to the second optical module, where:
the first detection circuit as described in the seventh aspect, various possible implementation manners of the seventh aspect, the eleventh aspect, or various possible implementation manners of the eleventh aspect are integrated into the first optical module; and
the second detection circuit as described in the eighth aspect, various possible implementation manners of the eighth aspect, the twelfth aspect, or various possible implementation manners of the twelfth aspect are integrated into the second optical module.

The invention is defined according to the method of claim 1 and the circuits of claims 4 and 5. Preferred embodiments are defined in the dependent claims. Beneficial effects of the technical solutions provided by the present invention are as follows:

A PCI-E transmit end transmits a first detection code pattern to a PCI-E receive end through optical transmission, so that after receiving the first detection code pattern, the PCI-E receive end feeds back a second detection code pattern to the PCI-E transmit end through the optical transmission; then the PCI-E transmit end detects whether the second detection code pattern fed back by the PCI-E receive end is received; and if a detection result is that the second detection code pattern fed back by the PCI-E receive end is received, the PCI-E transmit end determines that the PCI-E receive end is in position. This resolves the problem that receive end detection cannot be implemented by using a conventional method in a PCI-E bus that supports optical transmission, and achieves an effect that receive end detection can also be implemented in a PCI-E bus that supports optical transmission.

### BRIEF DESCRIPTION OF DRAWINGS

To describe the technical solutions of the present invention more clearly, the accompanying drawings describing embodiments of the invention are briefly described in the following. Apparently, the accompanying drawings in the following description show merely some embodiments of the present invention instead of all that are conceivable.
FIG. 1A is a schematic structural diagram of a PCI-E bus system that supports electrical transmission;
FIG. 1B is a schematic diagram illustrating switching between three states of a link state machine of a transmit end;
FIG. 2 is a schematic structural diagram of an implementation environment involved in a part of embodiments of the present invention;
FIG. 3 is a flowchart of a method for detecting a receive end provided by one embodiment of the present invention;
FIG. 4 is a flowchart of a method for detecting a receive end provided by another embodiment of the present invention;
FIG. 5A is a schematic structural diagram of an implementation environment involved in a part of embodiments of the present invention;
FIG. 5B is a schematic structural diagram of an implementation environment involved in a part of embodiments of the present invention;
FIG. 6 is a flowchart of a method for detecting a receive end provided by one embodiment of the present invention;
FIG. 7 is a flowchart of a method for detecting a receive end provided by another embodiment of the present invention;
FIG. 8 is a structural block diagram of a bus system provided by one embodiment of the present invention;
FIG. 9 is a structural block diagram of a bus system provided by another embodiment of the present invention;
FIG. 10 is a schematic structural diagram of a bus system provided by one embodiment of the present invention;
FIG. 11 is a schematic structural diagram of a bus system provided by another embodiment of the present invention;
FIG. 12 is a structural block diagram of a bus system provided by one embodiment of the present invention;
FIG. 13 is a structural block diagram of a bus system provided by another embodiment of the present invention;
FIG. 14 is a schematic structural diagram of a bus system provided by one embodiment of the present invention;
FIG. 15 is a schematic structural diagram of a bus system provided by another embodiment of the present invention; and
FIG. 16 is a schematic structural diagram of an optical module provided by still another embodiment of the present invention.

### DESCRIPTION OF EMBODIMENTS

To make the objectives, technical solutions, and advantages of the present invention clearer, the following further describes the embodiments of the present invention in detail with reference to the accompanying drawings.

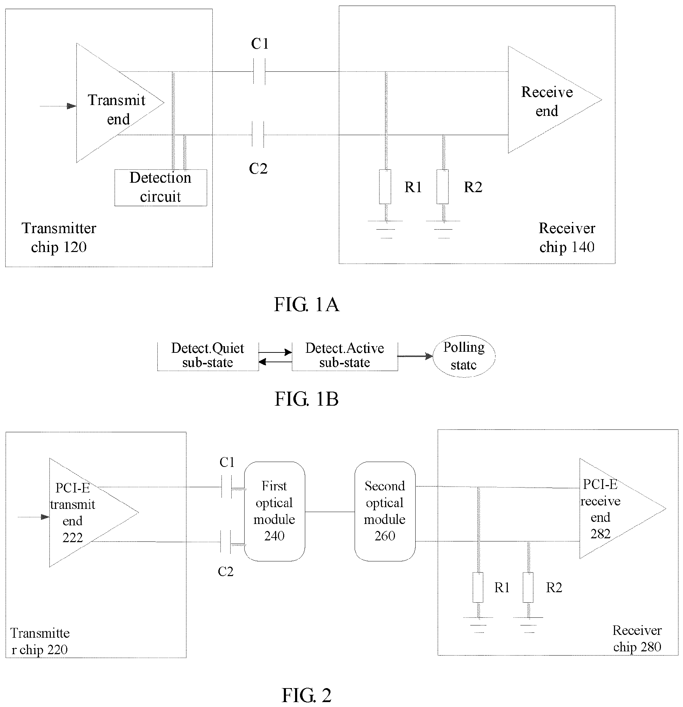

For ease of description, a method for performing receive end detection by a PCI-E bus by using an electrical connection is described in detail first. Referring to FIG. 1A, FIG. 1A shows a schematic structural diagram of a PCI-E bus system that supports electrical transmission. The PCI-E bus system includes two parts, a transmitter chip 120 and a receiver chip 140, where the two parts may be disposed in different devices or may be disposed in a same device. Detecting, by a PCI-E transmit end, whether a PCI-E receive end is in position includes:

Firstly, after being powered on initialization, the PCI-E transmit end transmits, from its two terminals D+ and D-, a pair of common-mode voltages higher than initial voltages, where the initial voltages may be 0 or a pair of equal and lower voltages at the two terminals, and the common-mode voltages are a pair of equal and higher voltages at the two terminals; if the PCI-E receive end is not connected to the PCI-E transmit end, that is, the PCI-E receive end is not in position, the PCI-E transmit end can detect that voltages across its two terminals rise from the initial voltages to the common-mode voltages rapidly; and if the PCI-E receive end is connected to the PCI-E transmit end, that is, the PCI-E receive end is in position, the PCI-E transmit end can detect that the voltages across its two terminals rise from the initial voltages to the common-mode voltages relatively slowly due to a charging process of an equivalent RC (Resistor-Capacitor, resistor-capacitor) charging circuit formed by a capacitor C1 with a resistor R1 and a capacitor C2 with a resistor R2; eventually, the PCI-E transmit end can detect whether the PCI-E receive end is in position by detecting, by using a detection circuit, a time duration for the voltages across its two terminals to rise from the initial voltages to the common-mode voltages. The capacitor C1 and the capacitor C2 may be a parasitic resistor-capacitor and an AC coupling capacitor; the resistor R1 and the resistor R2 may be terminating resistors of the PCI-E receive end.

In addition, the PCI-E transmit end further has a link state machine (be hereafter referred to as a link machine); in a process of detecting whether the receive end is in position by the PCI-E transmit end, the link state machine has three states: a Detect.Quiet sub-state (Detect.Quiet), a Detect.Active sub-state (Detect.Active), and a polling state (Polling). The Detect.Quiet sub-state represents that the PCI-E transmit end is in an electrical idle state; a maximum duration of the electrical idle state is determined by a time period timed by a timer; the link state machine enters the Detect.Active sub-state from the Detect.Quiet sub-state automatically when the time period timed by the timer elapses; the Detect.Active sub-state represents that the PCI-E transmit end is detecting whether the PCI-E receive end is in position; the polling state represents that the PCI-E transmit end has detected that the PCI-E receive end is in position and has started a link negotiation process.

Specifically, as shown in FIG. 1B, after power-on initialization of the PCI-E transmit end are completed, the link state machine is in the Detect.Quiet sub-state and first timing is started at the same time; after the timing is completed, the state of the link state machine switches from the Detect.Quiet sub-state into the Detect.Active sub-state automatically, the PCI-E transmit end starts to perform receive end detection, and second timing is started; if the PCI-E transmit end detects that the receive end is in position, the state of the link state machine switches from the Detect.Active sub-state into the polling state, the PCI-E transmit end starts to transmit a negotiation bit stream to the PCI-E receive end, and a link starts a normal negotiation process; if the PCI-E transmit end fails to detect that the PCI-E receive end is in position, the state of the link state machine switches from the Detect.Active sub-state back into the Detect.Quiet sub-state, and then the first timing is started again to repeat the foregoing process. Apparently, if the PCI-E transmit end fails to detect, in the Detect.Active sub-state, that the receive end is in position, the state of the link state machine does not enter the polling state, and the PCI-E transmit end does not transmit the negotiation bit stream to the PCI-E receive end, and therefore the link cannot be link up (LINK UP) as normal. Moreover, in a PCI-E bus system that supports electrical cable transmission, detecting whether the PCI-E receive end is in position by the PCI-E transmit end is implemented mainly by transmitting a common-mode voltage, but the common-mode voltage cannot be transmitted by using an optical module and an optical cable. That is, the optical module and the optical cable cannot transmit a common-mode voltage signal. Therefore, in the PCI-E bus system that supports optical cable transmission, the PCI-E transmit end cannot directly detect, according to the foregoing method for detecting a receive end by using an electrical connection, that the PCI-E receive end is in position, which causes that the link cannot be link up as normal.

Referring to FIG. 2, FIG. 2 shows a schematic structural diagram of an implementation environment involved in a part of embodiments of the present invention. The implementation environment is a PCI-E bus system that supports optical transmission. The PCI-E bus system includes a transmitter chip 220, a first optical module 240, a second optical module 260, and a receiver chip 280. The transmitter chip 220 and the receiver chip 280 may be disposed in different devices or may be disposed in a same device.

The transmitter chip 220 includes a transmit end 222; two differential lines of the transmit end 222 are connected to the first optical module 240 by using a capacitor C1 and a capacitor C2 respectively.

The first optical module 240 is connected to the second optical module 260 by using an optical fiber.

The receiver chip 280 includes a PCI-E receive end 282, two differential lines of the receive end 282 are connected to the second optical module 260 respectively, and the two differential lines are grounded by using a resistor R1 and a resistor R2 respectively.

The capacitor C1 and the capacitor C2 may be a parasitic resistor-capacitor and an AC coupling capacitor; the resistor R1 and the resistor R2 may be terminating resistors of the PCI-E receive end 282.

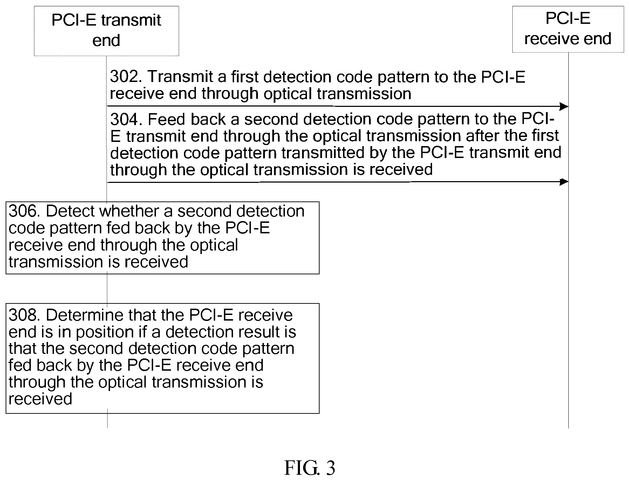

Referring to FIG. 3, FIG. 3 shows a flowchart of a method for detecting a receive end provided by one embodiment of the present invention. This embodiment is described mainly by using an example that the method for detecting a receive end is applied to the implementation environment shown in FIG. 2. The method for detecting a receive end includes:

Step 302: A PCI-E transmit end transmits a first detection code pattern to a PCI-E receive end through optical transmission.

In this embodiment, the PCI-E transmit end may be the PCI-E transmit end 222 in the PCI-E bus system that supports optical cable transmission shown in FIG. 2; and the PCI-E receive end may be the PCI-E receive end 282 in the PCI-E bus system that supports optical cable transmission shown in FIG. 2. The PCI-E transmit end may transmit the first detection code pattern to the PCI-E receive end through the optical transmission. Because an optical module and an optical cable can transmit only differential signals, the first detection code pattern is a differential signal.

The optical transmission may be performed by using the first optical module 240 and the second optical module 260 located between the PCI-E transmit end and the PCI-E receive end, and the optical fiber between the two optical modules.

Correspondingly, the PCI-E receive end receives, through the optical transmission, the first detection code pattern transmitted by the PCI-E transmit end.

Step 304: The PCI-E receive end feeds back a second detection code pattern to the PCI-E transmit end through the optical transmission after the first detection code pattern transmitted by the PCI-E transmit end through the optical transmission is received.

After receiving the first detection code pattern transmitted by the PCI-E transmit end through the optical transmission, the PCI-E receive end may feed back the second detection code pattern to the PCI-E transmit end through the optical transmission. The second detection code pattern is also a differential signal, and the second detection code pattern may be the same as or different from the first detection code pattern, as long as they are in accordance with code patterns agreed upon in advance between the PCI-E transmit end and the PCI-E receive end.

Correspondingly, the PCI-E transmit end receives the second detection code pattern fed back by the PCI-E receive end through the optical transmission.

Step 306: The PCI-E transmit end detects whether the second detection code pattern fed back by the PCI-E receive end through the optical transmission is received.

The PCI-E transmit end detects whether the second detection code pattern fed back by the PCI-E receive end through the optical transmission is received. That is, if the PCI-E receive end is in position, the PCI-E transmit end can receive the second detection code pattern fed back by the PCI-E receive end through the optical transmission; if the PCI-E receive end is not in position, the PCI-E transmit end cannot receive the second detection code pattern fed back by the PCI-E receive end through the optical transmission.

Step 308: The PCI-E transmit end determines that the PCI-E receive end is in position if a detection result is that the second detection code pattern fed back by the PCI-E receive end through the optical transmission is received.

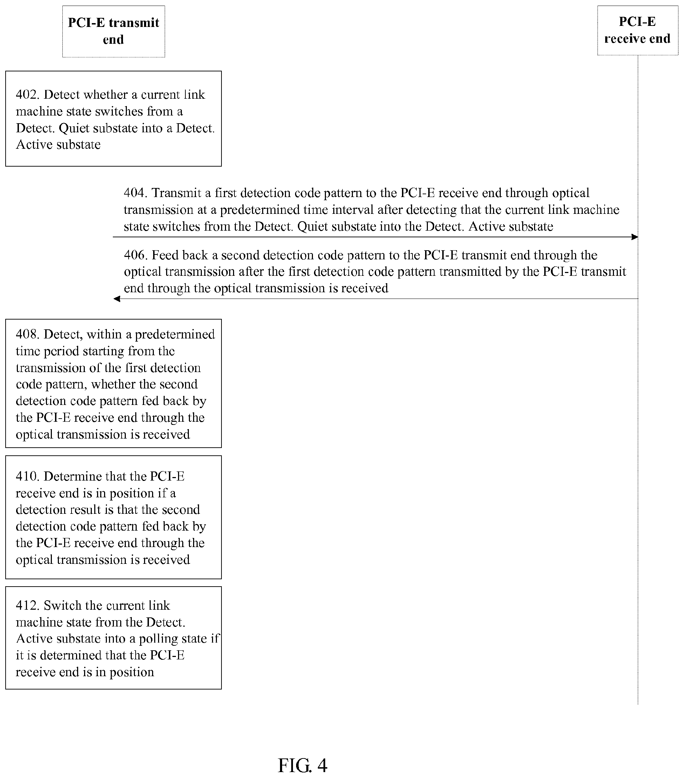

The first detection code pattern and the second detection code pattern may make reference to an exemplary code table of an embodiment shown in FIG. 4, but they are not limited thereto as long as they are in accordance with the code patterns agreed upon in advance between the PCI-E transmit end and the PCI-E receive end.

In conclusion, in the method for detecting a receive end provided by this embodiment: a PCI-E transmit end transmits a first detection code pattern to a PCI-E receive end through optical transmission, so that after receiving the first detection code pattern, the PCI-E receive end feeds back a second detection code pattern to the PCI-E transmit end through the optical transmission; then the PCI-E transmit end detects whether the second detection code pattern fed back by the PCI-E receive end through the optical transmission is received; and if a detection result is that the second detection code pattern fed back by the PCI-E receive end through the optical transmission is received, the PCI-E transmit end determines that the PCI-E receive end is in position. This resolves a problem that receive end detection cannot be implemented by using a conventional method in a PCI-E bus that supports optical transmission, and achieves an effect that receive end detection can also be implemented in a PCI-E bus that supports optical transmission.

Referring to FIG. 4, FIG. 4 shows a flowchart of a method for detecting a receive end provided by another embodiment of the present invention. This embodiment is described mainly by using an example that the method for detecting a receive end is applied to the implementation environment shown in FIG. 2. As a more preferable embodiment provided based on the embodiment shown in FIG. 3, the method for detecting a receive end includes:

Step 402: A PCI-E transmit end detects whether a current link machine state switches from a Detect.Quiet sub-state into a Detect.Active sub-state.

It can be known from the above description that in a process of receive end detection, the link machine state includes any one of the Detect.Quiet sub-state, the Detect.Active sub-state, and a polling state. After the PCI-E transmit end is powered on initialization, the link machine state is the Detect.Quiet sub-state and first timing is started at the same time; after the first timing is completed, the link machine state switches from the Detect.Quiet sub-state into the Detect.Active sub-state. The PCI-E transmit end first detects whether the current link machine state switches from the Detect.Quiet sub-state into the Detect.Active sub-state.

Step 404: The PCI-E transmit end transmits a first detection code pattern to a PCI-E receive end through optical transmission at a predetermined time interval after detecting that the current link machine state switches from the Detect.Quiet sub-state into the Detect.Active sub-state.

After detecting that the current link machine state switches from the Detect.Quiet sub-state into the Detect.Active sub-state, the PCI-E transmit end generates the first detection code pattern, and transmits the first detection code pattern to the PCI-E receive end through the optical transmission at the predetermined time interval. The optical transmission includes the first optical module 240 and the second optical module 260 located between the PCI-E transmit end and the PCI-E receive end, and the optical fiber between the two optical modules.

Correspondingly, the PCI-E receive end receives the first detection code pattern transmitted by the PCI-E transmit end through the optical transmission.

Step 406: The PCI-E receive end feeds back a second detection code pattern to the PCI-E transmit end through the optical transmission after the first detection code pattern transmitted by the PCI-E transmit end through the optical transmission is received.

After receiving the first detection code pattern transmitted by the PCI-E transmit end through the optical transmission, the PCI-E receive end may generate the second detection code pattern that is the same as or different from the first detection code pattern, and then feed back the second detection code pattern to the PCI-E transmit end through the optical transmission. Correspondingly, the PCI-E transmit end receives the second detection code pattern fed back by the PCI-E receive end through the optical transmission.

Step 408: The PCI-E transmit end detects, within a predetermined time period starting from the transmission of the first detection code pattern, whether the second detection code pattern fed back by the PCI-E receive end through the optical transmission is received.

Within the predetermined time period starting from the transmission of the first detection code pattern, the PCI-E transmit end detects whether the second detection code pattern fed back by the PCI-E receive end through the optical transmission is received. That is, if the PCI-E receive end is in position, the PCI-E transmit end can receive the second detection code pattern fed back by the PCI-E receive end through the optical transmission; if the PCI-E receive end is not in position, the PCI-E transmit end cannot receive the second detection code pattern fed back by the PCI-E receive end through the optical transmission. The "predetermined time period" described herein is a time length of second timing performed after the foregoing link state machine switches from the Detect.Quiet sub-state into the Detect.Active sub-state.

Step 410: The PCI-E transmit end determines that the PCI-E receive end is in position if a detection result is that the second detection code pattern fed back by the PCI-E receive end through the optical transmission is received.

Within the predetermined time period starting from the transmission of the first detection code pattern, if the detection result is that the PCI-E transmit end receives the second detection code pattern fed back by the PCI-E receive end through the optical transmission, the PCI-E transmit end determines that the PCI-E receive end is in position. Within the predetermined time period starting from the transmission of the first detection code pattern, if the detection result is that the PCI-E transmit end does not receive the second detection code pattern fed back by the PCI-E receive end through the optical transmission, the PCI-E transmit end determines that the PCI-E receive end is not in position; the current link machine state switches from the Detect.Active sub-state back into the Detect.Quiet sub-state, and the first timing is started again.

Step 412: If determining that the PCI-E receive end is in position, the PCI-E transmit end switches the current link machine state from the Detect.Active sub-state into the polling state.

If determining that the PCI-E receive end is in position, the PCI-E transmit end switches the current link machine state from the Detect.Active sub-state into the polling state. The PCI-E transmit end transmits a negotiation bit stream to the PCI-E receive end, and a link starts a normal negotiation process.

Preferably, the foregoing first detection code pattern and second detection code pattern meet the following two conditions: first, the first detection code pattern and the second detection code pattern are only used for receive end in-position detection and does not appear in other bit streams; second, frequencies of the first detection code pattern and the second detection code pattern are higher than a predetermined threshold. Otherwise, if the frequencies of the first detection code pattern and the second detection code pattern are too low, the optical cable transmission may be distorted. Meanwhile, the first detection code pattern and the second detection code pattern need to be differential signals with reference to the following exemplary code table. Both the first detection code pattern and the second detection code pattern may be code patterns formed by K28.0+K28.1+K28.2+K28.3+K28.4.

| **Exemplary Code Table** | | | | |
|---|---|---|---|---|
| **Name of data byte** | **Value of date byte** | **8-bit numerical value before coding** | **10-bit numerical value at the D-terminal after coding** | **10-bit numerical value at the D+ terminal after coding** |
| K28.0 | 1C | 00011100 | 0011110100 | 1100001011 |
| K28.1 | 3C | 00111100 | 0011111001 | 1100000110 |
| K28.2 | 5C | 01011100 | 0011110101 | 1100001010 |
| K28.3 | 7C | 01111100 | 0011110011 | 1100001100 |
| K28.4 | 9C | 10011100 | 0011110010 | 1100001101 |
| K28.5 | BC | 10111100 | 0011111010 | 1100000101 |
| K28.6 | DC | 11011100 | 0011110110 | 1100001001 |
| K28.7 | FC | 11111100 | 0011111000 | 1100000111 |
| K23.7 | F7 | 11110111 | 1110101000 | 0001010111 |
| K27.7 | FB | 11111011 | 1101101000 | 0010010111 |
| K29.7 | FD | 11111101 | 1011101000 | 0100010111 |
| K30.7 | FE | 11111110 | 0111101000 | 1000010111 |

In conclusion, in the method for detecting a receive end provided by this embodiment: a PCI-E transmit end transmits a first detection code pattern to a PCI-E receive end through optical transmission, so that after receiving the first detection code pattern, the PCI-E receive end feeds back a second detection code pattern to the PCI-E transmit end through the optical transmission; then the PCI-E transmit end detects whether the second detection code pattern fed back by the PCI-E receive end through the optical transmission is received; and if a detection result is that the second detection code pattern fed back by the PCI-E receive end through the optical transmission is received, the PCI-E transmit end determines that the PCI-E receive end is in position. This resolves a problem that receive end detection cannot be implemented by using a conventional method in a PCI-E bus that supports optical transmission, and achieves an effect that receive end detection can also be implemented in a PCI-E bus that supports optical transmission. Meanwhile, the foregoing method is further implemented in combination with the state of the link state machine, so that it can achieve maximum compatibility with an existing detection mechanism without changing the normal state switching of the link state machine.

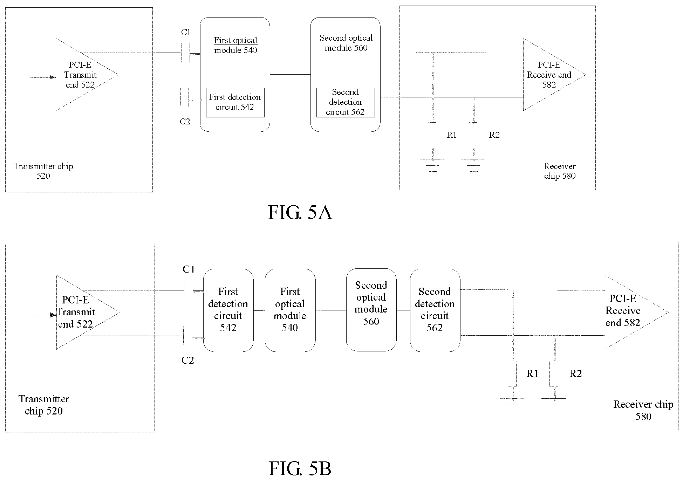

Referring to FIG. 5A, FIG. 5A shows a schematic structural diagram of an implementation environment involved in a part of embodiments of the present invention. The implementation environment is a PCI-E bus system that supports optical transmission. The PCI-E bus system includes a transmitter chip 520, a first optical module 540, a second optical module 560, and a receiver chip 580. The transmitter chip 520 and the receiver chip 580 may be disposed in two different devices or may be disposed in a same device.

The transmitter chip 520 includes a PCI-E transmit end 522; two differential lines of the PCI-E transmit end 522 are connected to the first optical module 540 by using a capacitor C1 and a capacitor C2 respectively.

The first optical module 540 is connected to the second optical module 560 by using an optical fiber. Different from FIG. 2, a first detection circuit 542 is integrated into a circuit section of the first optical module 540; a second detection circuit 562 is integrated into a circuit section of the second optical module 560. The first detection circuit 542 and the second detection circuit 562 can communicate with each other by multiplexing the original optical fiber between the first optical module 540 and the second optical module 560; the first detection circuit 542 and the second detection circuit 562 can also communicate with each other by using an optical fiber additionally disposed.

The receiver chip 580 includes a PCI-E receive end 582; two differential lines of the PCI-E receive end 582 are connected to the second optical module 560 respectively and are grounded by using a resistor R1 and a resistor R2 respectively.

The capacitor C1 and the capacitor C2 may be a parasitic resistor-capacitor and an AC coupling capacitor; the resistor R1 and the resistor R2 may be terminating resistors of the PCI-E receive end 582.

Referring to FIG. 5B, FIG. 5B shows a schematic structural diagram of an implementation environment involved in another part of embodiments of the present invention. The implementation environment is a PCI-E bus system that supports optical transmission. The PCI-E bus system includes a transmitter chip 520, a first optical module 540, a second optical module 560, and a receiver chip 580. The transmitter chip 520 and the receiver chip 580 may be disposed in two different devices or may be disposed in a same device.

Different from FIG. 5A, the transmitter chip 520 includes a PCI-E transmit end 522; two differential lines of the PCI-E transmit end 522 are connected to a first detection circuit 542 by using a capacitor C1 and a capacitor C2 respectively; and the first detection circuit 542 is connected to the first optical module 540.

The first optical module 540 is connected to the second optical module 560 by using an optical fiber.

The receiver chip 580 includes a PCI-E receive end 582; two differential lines of the PCI-E receive end 582 are connected to a second detection circuit 562 respectively; the second detection circuit 562 is connected to the second optical module 560; and two differential lines of the PCI-E receive end 582 are grounded by using a resistor R1 and a resistor R2 respectively.

The first detection circuit 542 and the second detection circuit 562 can communicate with each other by multiplexing the original optical fiber between the first optical module 540 and the second optical module 560; the first detection circuit 542 and the second detection circuit 562 can also communicate with each other by using an optical fiber additionally disposed.

The capacitor C1 and the capacitor C2 may be a parasitic resistor-capacitor and an AC coupling capacitor; the resistor R1 and the resistor R2 may be terminating resistors of the PCI-E receive end.

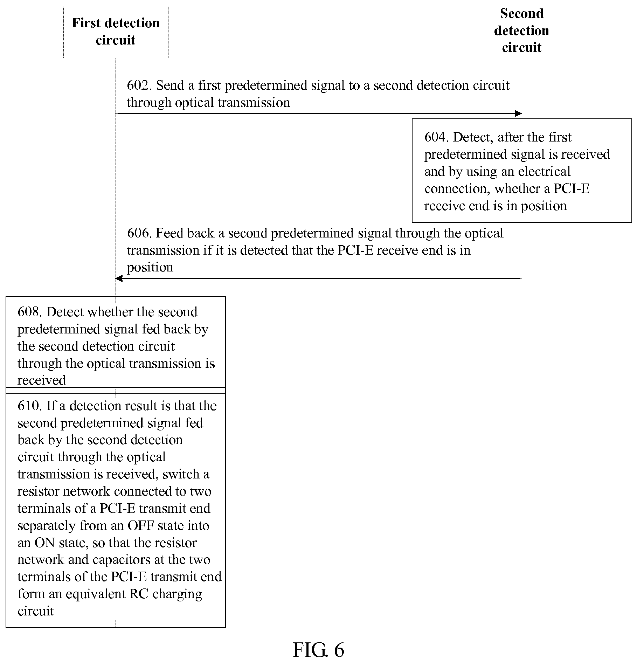

Referring to FIG. 6, FIG. 6 shows a flowchart of a method for detecting a receive end provided by one embodiment of the present invention. This embodiment is described mainly by using an example that the method for detecting a receive end is applied to the implementation environment shown in FIG. 5A or FIG. 5B. The method for detecting a receive end includes:

Step 602: A first detection circuit transmits a first predetermined signal to a second detection circuit through optical transmission.

The first detection circuit transmits the first predetermined signal to the second detection circuit through the optical transmission. If the implementation environment is the implementation environment shown in FIG. 5A, the optical transmission includes the original optical fiber or the newly disposed optical fiber between the first optical module 540 and the second optical module 560; if the implementation environment is the implementation environment shown in FIG. 5B, the optical transmission includes the first optical module 540, the second optical module 560, and the original optical fiber or the newly disposed optical fiber between the first optical module 540 and the second optical module 560.

Correspondingly, the second detection circuit receives the first predetermined signal transmitted by the first detection circuit through the optical transmission. The first predetermined signal is a differential signal used to trigger the second detection circuit to perform PCI-E receive end detection.

Step 604: After receiving the first predetermined signal, the second detection circuit detects, by using an electrical connection, whether a PCI-E receive end is in position.

After receiving the first predetermined signal, the second detection circuit detects, by using an electrical connection between the second detection circuit and the PCI-E receive end, whether the PCI-E receive end is in position.

Step 606: If detecting that the PCI-E receive end is in position, the second detection circuit feeds back a second predetermined signal through the optical transmission.

If detecting that the PCI-E receive end is in position, the second detection circuit feeds back a second predetermined signal to the first detection circuit through the optical transmission. The second predetermined signal is also a differential signal used to feed back to the first detection circuit that the PCI-E receive end is in position.

Step 608: The first detection circuit detects whether the second predetermined signal fed back by the second detection circuit through the optical transmission is received.

Step 610: If a detection result of the first detection circuit is that the second predetermined signal fed back by the second detection circuit through the optical transmission is received, switch a resistor network connected to two terminals of the PCI-E transmit end separately from an OFF state into an ON state, so that the resistor network and capacitors at the two terminals of the PCI-E transmit end form an equivalent RC charging circuit.

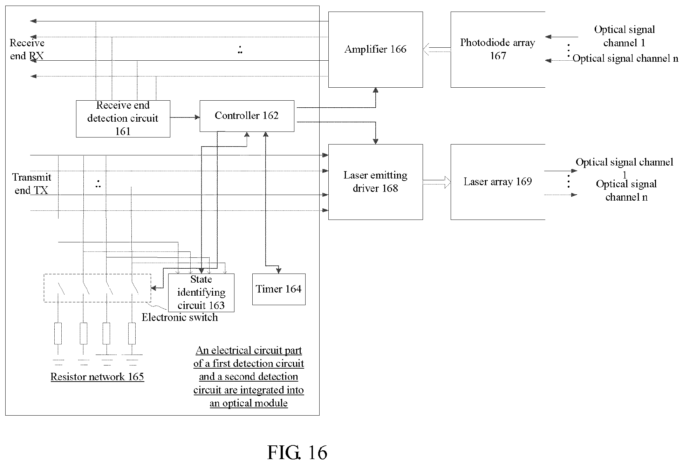

The resistor network may exemplarily make reference to FIG. 16 and a corresponding description.

Inside the first detection circuit, the resistor network connected to the two terminals of the PCI-E transmit end separately and a corresponding electronic switch are included, and if the detection result of the first detection circuit is that the second predetermined signal fed back by the second detection circuit is received, the resistor network connected to the two terminals of the PCI-E transmit end separately switches from the OFF state into the ON state, so that the resistor network and the capacitors at the two terminals of the PCI-E transmit end form an equivalent RC charging circuit. That is, the first detection circuit has itself simulated as the "PCI-E receive end".

The electronic switch may exemplarily make reference to FIG. 16 and a corresponding description.

Then, the PCI-E transmit end determines, according to the equivalent RC charging circuit, that the PCI-E receive end is in position.

In conclusion, in the method for detecting a receive end provided by this embodiment, PCI-E receive end detection is implemented by a second detection circuit and a PCI-E receive end by using an electrical connection, the second detection circuit and a first detection circuit communicate with each other through optical transmission, and a resistor network in the first detection circuit and capacitors at two terminals of a PCI-E transmit end form an equivalent RC charging circuit, so that the PCI-E transmit end detects that the PCI-E receive end is in position. This resolves a problem that receive end detection cannot be implemented by using a conventional method in a PCI-E bus that supports optical transmission, and achieves an effect that receive end detection can also be implemented in a PCI-E bus that supports optical transmission.

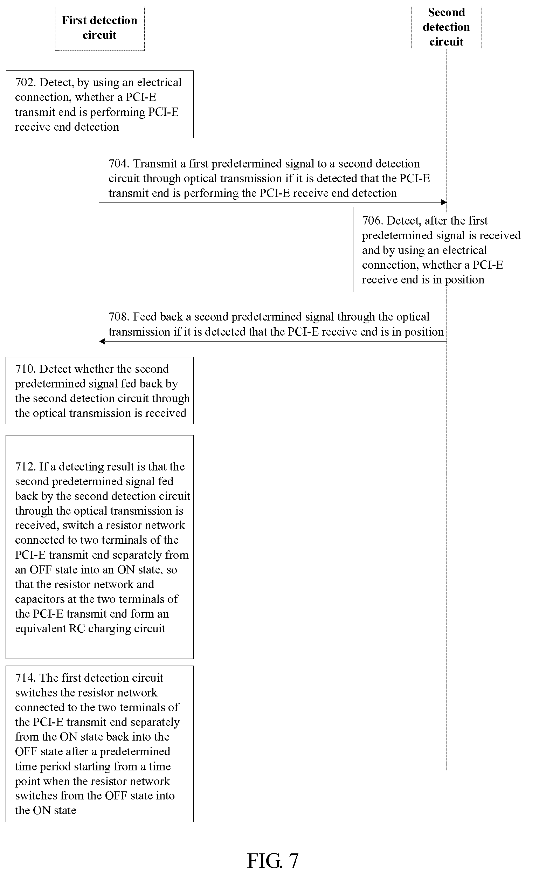

Referring to FIG. 7, FIG. 7 shows a flowchart of a method for detecting a receive end provided by another embodiment of the present invention. This embodiment is described mainly by using an example that the method for detecting a receive end is applied to the implementation environment shown in FIG. 5A or FIG. 5B. As a more preferable embodiment provided based on the embodiment shown in FIG. 6, the method for detecting a receive end includes:

Step 702: A first detection circuit detects, by using an electrical connection, whether a PCI-E transmit end is performing receive end detection.

The first detection circuit first detects, by using the electrical connection, whether the PCI-E transmit end is performing the PCI-E receive end detection. Specifically, the first detection circuit detects whether an amplitude of a differential signal output by two terminals of the PCI-E transmit end is less than a first threshold, for example, the amplitude of the differential signal is less than 65 mv, and whether a positive transition, an amplitude of which is greater than a second threshold, exists in a common-mode voltage output by the two terminals within a predetermined time period, for example, a positive transition, an amplitude of which is greater than 500mv, exists within 1 ms, that is, whether the PCI-E transmit end transmits a common-mode voltage higher than an initial voltage.

Step 704: If detecting that the PCI-E transmit end is performing the PCI-E receive end detection, the first detection circuit transmits a first predetermined signal to a second detection circuit through the optical transmission.

If the first detection circuit detects that the PCI-E transmit end is performing the PCI-E receive end detection, the first detection circuit may transmit the first predetermined signal to the second detection circuit through the optical transmission. If the implementation environment is the implementation environment shown in FIG. 5A, the optical transmission includes the original optical fiber or the newly disposed optical fiber between the first optical module 540 and the second optical module 560; if the implementation environment is the implementation environment shown in FIG. 5B, the optical transmission includes the first optical module 540, the second optical module 560, and the original optical fiber or the newly disposed optical fiber between the first optical module 540 and the second optical module 560. The first predetermined signal is a differential signal used to trigger the second detection circuit to perform the PCI-E receive end detection.

Correspondingly, the second detection circuit receives, through the optical transmission, the first predetermined signal transmitted by the first detection circuit.

Step 706: After receiving the first predetermined signal, the second detection circuit detects, by using an electrical connection, whether a PCI-E receive end is in position.

After receiving the first predetermined signal, the second detection circuit detects, by using the electrical connection, whether the receive end is in position. Specifically, the second detection circuit transmits a common-mode voltage by using two terminals connected to the PCI-E receive end, where the common-mode voltage is higher than an initial voltage; and detects whether a time duration for a voltage across the two terminals connected to the PCI-E receive end to rise from the initial voltage to the common-mode voltage is greater than a predetermined threshold. If the required time duration is greater than the predetermined threshold, the PCI-E receive end is in position.

Step 708: If detecting that the PCI-E receive end is in position, the second detection circuit feeds back a second predetermined signal through the optical transmission.

If detecting that the PCI-E receive end is in position, the second detection circuit feeds back a second predetermined signal to the first detection circuit through the optical transmission. The second predetermined signal is also a differential signal used to provide feedback to the first detection circuit that the PCI-E receive end is in position.

Step 710: The first detection circuit detects whether the second predetermined signal fed back by the second detection circuit through the optical transmission is received.

Step 712: If a detection result of the first detection circuit is that the second predetermined signal fed back by the second detection circuit through the optical transmission is received, switch a resistor network connected to the two terminals of the PCI-E transmit end separately from an OFF state into an ON state, so that the resistor network and capacitors at the two terminals of the PCI-E transmit end form an equivalent RC charging circuit.

Inside the first detection circuit, a resistor network connected to the two terminals of the PCI-E transmit end separately and a corresponding electronic switch are included, and if the detection result of the first detection circuit is that the second predetermined signal fed back by the second detection circuit is received, the resistor network connected to the two terminals of the PCI-E transmit end separately switches from the OFF state into the ON state, so that the resistor network and capacitors at the two terminals of the PCI-E transmit end form an equivalent RC charging circuit. That is, the first detection circuit has itself simulated as the "PCI-E receive end".

Then, the PCI-E transmit end determines, according to the equivalent RC charging circuit, that the PCI-E receive end is in position.

The PCI-E transmit end can detect, according to the equivalent RC charging circuit, that the PCI-E receive end is in position. Specifically, the PCI-E transmit end transmits a pair of common-mode voltages higher than the initial voltages to the first detection circuit by using its two terminals, and detects whether the PCI-E receive end is in position by detecting whether a time duration for the voltage across the two terminals to rise from the initial voltage to the common-mode voltage is greater than a predetermined threshold. Because the equivalent RC charging circuit, formed by the capacitors and the resistor network in the first detection circuit, exists between the PCI-E transmit end and the first detection circuit, the PCI-E transmit end can detect that the PCI-E receive end is in position.

Step 714: The first detection circuit switches the resistor network connected to the two terminals of the PCI-E transmit end separately from the ON state back into the OFF state after a predetermined time period starting from a time point when the resistor network switches from the OFF state into the ON state.

In step 712, the first detection circuit start the timing after switching the resistor network connected to the two terminals of the PCI-E transmit end separately from the OFF state into the ON state. After the predetermined time period is timed, the first detection circuit switches the resistor network connected to the two terminals of the PCI-E transmit end separately from the ON state back into the OFF state.

In conclusion, in the method for detecting a receive end provided by this embodiment, PCI-E receive end detection is implemented by a second detection circuit and a PCI-E receive end by using an electrical connection, the second detection circuit and a first detection circuit communicate with each other through optical transmission, and a resistor network in the first detection circuit and capacitors at two terminals of a PCI-E transmit end form an equivalent RC charging circuit, so that the PCI-E transmit end detects that the PCI-E receive end is in position. This resolves a problem that receive end detection cannot be implemented by using a conventional method in a PCI-E bus that supports optical transmission, and achieves an effect that receive end detection can also be implemented in a PCI-E bus that supports optical transmission. Furthermore, the subsequent steps are not triggered until the first detection circuit detects that the PCI-E transmit end is performing the PCI-E receive end detection, so that maximum compatibility with an existing detection mechanism can be achieved.

The following are apparatus embodiments of the present invention, which may be used to execute the method embodiments of the present invention. For technical details not disclosed in the apparatus embodiments of the present invention, reference may be made to the method embodiments of the present invention.

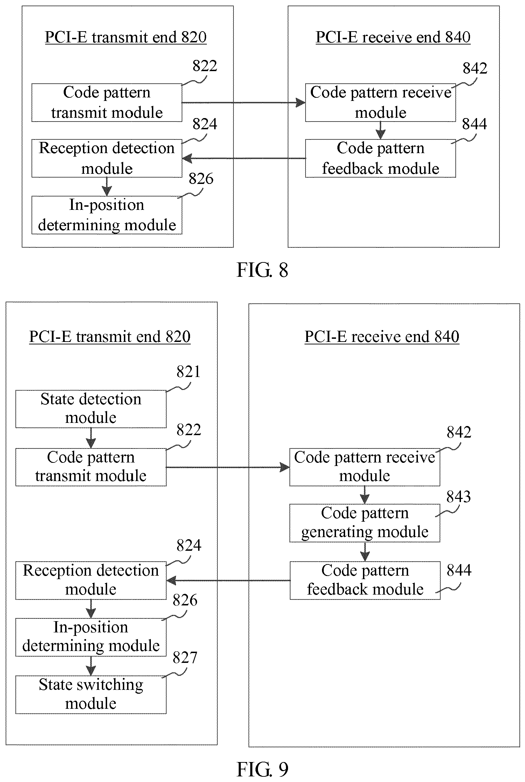

Referring to FIG. 8, FIG. 8 shows a structural block diagram of a bus system provided by one embodiment of the present invention. This embodiment is described mainly by using an example that the bus system is a PCI-E bus system. The bus system includes a PCI-E transmit end 820 and a PCI-E receive end 840.

The PCI-E transmit end 820 includes a code pattern transmit module 822, a reception detection module 824, and an in-position determining module 826.

The code pattern transmit module 822 is configured to transmit a first detection code pattern to the PCI-E receive end 840 through optical transmission, so that after receiving the first detection code pattern, the PCI-E receive end 840 feeds back a second detection code pattern through the optical transmission.

The reception detection module 824 is configured to detect whether the second detection code pattern fed back by the PCI-E receive end 840 through the optical transmission is received.

The in-position determining module 826 is configured to determine that the PCI-E receive end840 is in position if a detection result of the reception detection module 824 is that the second detection code pattern fed back by the PCI-E receive end 840 through the optical transmission is received.

The PCI-E receive end 840 includes a code pattern receive module 842 and a code pattern feedback module 844.

The code pattern receive module 842 is configured to receive the first detection code pattern transmitted by the PCI-E transmit end 820 through the optical transmission.

The code pattern feedback module 844 is configured to feed back the second detection code pattern to the PCI-E transmit end 820 through the optical transmission after the code pattern receive module 842 receives the first detection code pattern transmitted by the PCI-E transmit end through the optical transmission, so that the PCI-E transmit end 820 determines, according to the second detection code pattern, that the PCI-E receive end is in position.

Both the first detection code pattern and the second detection code pattern are differential signals.

In conclusion, according to the bus system for detecting a receive end provided by this embodiment: a PCI-E transmit end transmits a first detection code pattern to a PCI-E receive end through optical transmission, so that after receiving the first detection code pattern, the PCI-E receive end feeds back a second detection code pattern to the PCI-E transmit end through the optical transmission; then the PCI-E transmit end detects whether the second detection code pattern fed back by the PCI-E receive end through the optical transmission is received; and if a detection result is that the second detection code pattern fed back by the PCI-E receive end through the optical transmission is received, the PCI-E transmit end determines that the PCI-E receive end is in position. This resolves a problem that receive end detection cannot be implemented by using a conventional method in a PCI-E bus that supports optical transmission, and achieves an effect that receive end detection can also be implemented in a PCI-E bus that supports optical transmission.

Referring to FIG. 9, FIG. 9 shows a structural block diagram of a bus system provided by another embodiment of the present invention. This embodiment is described mainly by using an example that the bus system is a PCI-E bus system. As a more preferable embodiment provided based on the embodiment shown in FIG. 8, the bus system includes a PCI-E transmit end 820 and a PCI-E receive end 840.

The PCI-E transmit end 820 includes a state detection module 821, a code pattern transmit module 822, a reception detection module 824, an in-position determining module 826, and a state switching module 827.

The state detection module 821 is configured to detect whether a current link machine state switches from a Detect.Quiet sub-state into a Detect.Active sub-state.

The code pattern transmit module 822 is configured to transmit a first detection code pattern to the PCI-E receive end 840 at a predetermined time interval after the state detection module 821 detects that the current link machine state switches from the Detect.Quiet sub-state into the Detect. Active sub-state.

The reception detection module 824 is configured to: within a predetermined time period starting from the transmission of the first detection code pattern by the code pattern transmit module 822, detect whether a second detection code pattern fed back by the PCI-E receive end 840 is received.

The in-position determining module 826 is configured to determine that the PCI-E receive end 840 is in position if a detection result of the reception detection module 824 is that the second detection code pattern fed back by the PCI-E receive end 840 through the optical transmission is received.

The state switching module 827 is configured to switch the current link machine state from the Detect.Active sub-state into a polling state after the in-position determining module 826 determines that the PCI-E receive end 840 is in position.

It should be noted that, the first detection code pattern transmitted by the code pattern transmit module 822 is either the same as or different from the second detection code pattern detected by the reception detection module 824, and frequencies of the first detection code pattern and the second detection code pattern are higher than a predetermined frequency threshold. Both the first detection code pattern and the second detection code pattern are differential signals.

The PCI-E receive end 840 includes a code pattern receive module 842, a code pattern generating module 843, and a code pattern feedback module 844.

The code pattern receive module 842 is configured to receive the first detection code pattern transmitted by the PCI-E transmit end 820 through the optical transmission.

The code pattern generating module 843 is configured to generate the second detection code pattern that is the same as or different from the first detection code pattern received by the code pattern receive module 842.

The code pattern feedback module 844 is configured to feed back the second detection code pattern generated by the code pattern generating module 843 to the PCI-E transmit end 820 through the optical transmission after the code pattern receive module 842 receives the first detection code pattern transmitted by the PCI-E transmit end 820 through the optical transmission, so that the PCI-E transmit end 820 determines, according to the second detection code pattern, that the PCI-E receive end 840 is in position. Both the first detection code pattern and the second detection code pattern are differential signals, and the optical transmission includes an optical module and an optical fiber.

In conclusion, according to the bus system provided by this embodiment, a PCI-E transmit end transmits a first detection code pattern to a PCI-E receive end through optical transmission, so that after receiving the first detection code pattern, the PCI-E receive end feeds back a second detection code pattern to the PCI-E transmit end through the optical transmission; then the PCI-E transmit end detects whether the second detection code pattern fed back by the PCI-E receive end through the optical transmission is received; and if a detection result is that the second detection code pattern fed back by the PCI-E receive end through the optical transmission is received, the PCI-E transmit end determines that the PCI-E receive end is in position. This resolves a problem that receive end detection cannot be implemented by using a conventional method in a PCI-E bus that supports optical transmission, and achieves an effect that receive end detection can also be implemented in a PCI-E bus that supports optical transmission. Meanwhile, the foregoing method is further implemented in combination with the state of the link state machine, so that it can achieve maximum compatibility with an existing detection mechanism without changing the normal state switching of the link state machine.

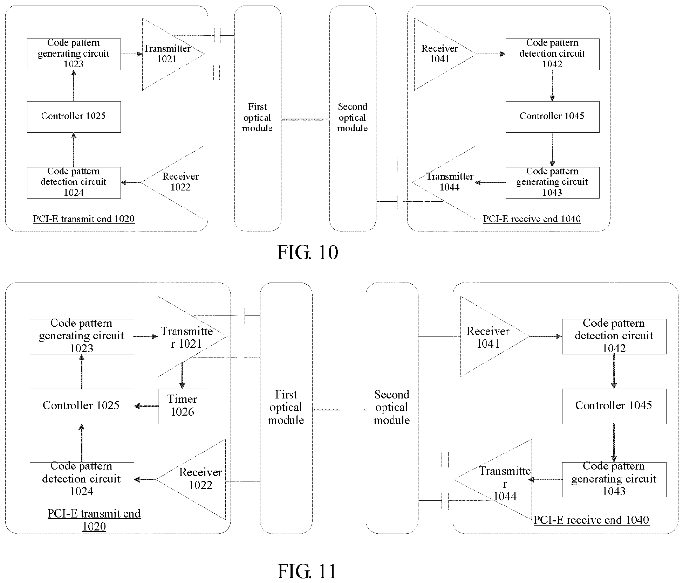

Referring to FIG. 10, FIG. 10 shows a schematic structural diagram of a bus system provided by one embodiment of the present invention. This embodiment is described mainly by using an example that the bus system is a PCI-E bus system. The bus system includes a PCI-E transmit end 1020 and a PCI-E receive end 1040.

The PCI-E transmit end 1020 includes a transmitter 1021, a receiver 1022, a code pattern generating circuit 1023, a code pattern detection circuit 1024, and a controller 1025.

The PCI-E transmitter 1021 is configured to transmit a first detection code pattern generated by the code pattern generating circuit 1023 to the PCI-E receive end 1040 through optical transmission, so that after receiving the first detection code pattern, the PCI-E receive end 1040 feeds back a second detection code pattern through the optical transmission.

The code pattern detection circuit 1024 is configured to detect whether the receiver 1022 receives the second detection code pattern fed back by the PCI-E receive end 1040 through the optical transmission.

The controller 1025 is configured to determine that the PCI-E receive end 1040 is in position if a detection result of the code pattern detection circuit 1024 is that the receiver 1022 receives the second detection code pattern fed back by the PCI-E receive end 1040 through the optical transmission.

Both the first detection code pattern and the second detection code pattern are differential signals.

The PCI-E receive end 1040 includes a receiver 1041, a code pattern detection circuit 1042, a code pattern generating circuit 1043, a transmitter 1044, and a controller 1045.

The receiver 1041 is configured to receive the first detection code pattern transmitted by the PCI-E transmit end 1020 through the optical transmission.

The controller 1045 is configured to: after the code pattern detection circuit 1042 detects that the receiver 1041 receives the first detection code pattern transmitted by the PCI-E transmit end 1020 through the optical transmission, control the transmitter 1044 to feed back, through the optical transmission, a second detection code pattern generated by the code pattern generating circuit 1043 to the PCI-E transmit end 1020, so that the PCI-E transmit end 1020 determines, according to the second detection code pattern, that the PCI-E receive end 1040 is in position.

Both the first detection code pattern and the second detection code pattern are differential signals.

In conclusion, according to the bus system, a PCI-E transmit end transmits a first detection code pattern to a PCI-E receive end through optical transmission, so that after receiving the first detection code pattern, the PCI-E receive end feeds back a second detection code pattern to the PCI-E transmit end through the optical transmission; then the PCI-E transmit end detects whether the second detection code pattern fed back by the PCI-E receive end through the optical transmission is received; and if a detection result is that the second detection code pattern fed back by the PCI-E receive end through the optical transmission is received, the PCI-E transmit end determines that the PCI-E receive end is in position. This resolves a problem that receive end detection cannot be implemented by using a conventional method in a PCI-E bus that supports optical transmission, and achieves an effect that receive end detection can also be implemented in a PCI-E bus that supports optical transmission.

Referring to FIG. 11, FIG. 11 shows a schematic structural diagram of a bus system provided by another embodiment of the present invention. This embodiment is described mainly by using an example that the bus system is a PCI-E bus system. As a more preferable embodiment provided based on the embodiment shown in FIG. 10, the bus system includes a PCI-E transmit end 1020 and a PCI-E receive end 1040.

The PCI-E transmit end 1020 includes a transmitter 1021, a receiver 1022, a code pattern generating circuit 1023, a code pattern detection circuit 1024, a controller 1025, and a timer 1026.

The controller 1025 is configured to detect whether a current link machine state switches from a Detect.Quiet sub-state into a Detect.Active sub-state.

The transmitter 1021 is configured to transmit a first detection code pattern generated by the code pattern generating circuit 1023 to the PCI-E receive end 1040 at a predetermined time interval after the controller 1025 detects that the current link machine state switches from the Detect.Quiet sub-state into the Detect.Active sub-state, so that after receiving the first detection code pattern, the PCI-E receive end 1040 feeds back a second detection code pattern through the optical transmission.

The timer 1026 is configured to time a predetermined time period after the transmitter 1021 transmits the first detection code pattern generated by the code pattern generating circuit 1023.

The code pattern detection circuit 1024 is configured to: within the predetermined time period timed by the timer 1026, detect whether the receiver 1022 receives the second detection code pattern fed back by the PCI-E receive end 1040 through the optical transmission.

The controller 1025 is configured to determine that the PCI-E receive end 1040 is in position if a detection result of the code pattern detection circuit 1024 is that the receiver 1022 receives the second detection code pattern fed back by the PCI-E receive end 1040 through the optical transmission.

The controller 1026 is further configured to switch the current link machine state from the Detect.Active sub-state into a polling state after it is determined that the PCI-E receive end 1040 is in position.

The first detection code pattern generated by the code pattern generating circuit 1023 is either the same as or different from the second detection code pattern received by the receiver 1022, and frequencies of the first detection code pattern and the second detection code pattern are higher than a predetermined frequency threshold. Both the first detection code pattern and the second detection code pattern are differential signals.

The PCI-E receive end 1040 includes a receiver 1041, a code pattern detection circuit 1042, a code pattern generating circuit 1043, a transmitter 1044, and a controller 1045.

The receiver 1041 is configured to receive the first detection code pattern transmitted by the PCI-E transmit end 1020 through the optical transmission.

The code pattern generating circuit 1043 is configured to generate the second detection code pattern that is the same as or different from the first detection code pattern received by the receiver 1041.

The controller 1045 is configured to: after the code pattern detection circuit 1042 detects that the receiver 1041 receives the first detection code pattern transmitted by the PCI-E transmit end 1020 through the optical transmission, control the transmitter 1044 to feed back, through the optical transmission, the second detection code pattern generated by the code pattern generating circuit 1043 to the PCI-E transmit end 1020, so that the PCI-E transmit end 1020 determines, according to the second detection code pattern, that the PCI-E receive end 1040 is in position.

In conclusion, in the bus system provided by this embodiment, a PCI-E transmit end transmits a first detection code pattern to a PCI-E receive end through optical transmission, so that after receiving the first detection code pattern, the PCI-E receive end feeds back a second detection code pattern to the PCI-E transmit end through the optical transmission; then the PCI-E transmit end detects whether the second detection code pattern fed back by the PCI-E receive end through the optical transmission is received; and if a detection result is that the second detection code pattern fed back by the PCI-E receive end through the optical transmission is received, the PCI-E transmit end determines that the PCI-E receive end is in position. This resolves a problem that receive end detection cannot be implemented by using a conventional method in a PCI-E bus that supports optical transmission, and achieves an effect that receive end detection can also be implemented in a PCI-E bus that supports optical transmission. Meanwhile, the foregoing method is further implemented in combination with the state of the link state machine, so that it can achieve maximum compatibility with an existing detection mechanism without changing the normal state switching of the link state machine.

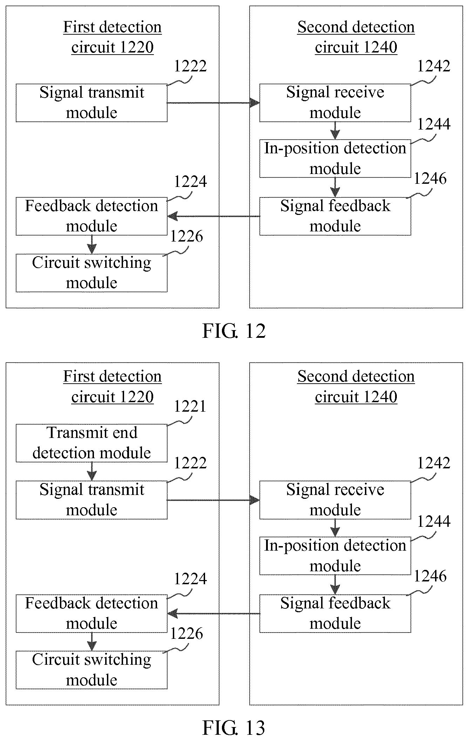

Referring to FIG. 12, FIG. 12 shows a structural block diagram of a bus system provided by one embodiment of the present invention. This embodiment is described mainly by using an example that the bus system is a PCI-E bus system shown in FIG. 5A or FIG. 5B. The bus system includes a first detection circuit 1220 and a second detection circuit 1240.

The first detection circuit 1220 may be integrated into a first optical module or between the first optical module and a PCI-E transmit end.

The second detection circuit 1240 may be integrated into a second optical module or between the second optical module and a PCI-E receive end.

The first detection circuit 1220 and the second detection circuit 1240 may exchange signals with each other through optical transmission.

The first detection circuit 1220 includes a signal transmit module 1222, a feedback detection module 1224 and a circuit switching module 1226.

The signal transmit module 1222 is configured to transmit a first predetermined signal to the second detection circuit 1240 through the optical transmission, so that after receiving the first predetermined signal, the second detection circuit 1240 detects, by using an electrical connection, whether a PCI-E receive end is in position, and feed back a second predetermined signal through the optical transmission if it is detected that the PCI-E receive end is in position.

The feedback detection module 1224 is configured to detect whether the second predetermined signal fed back by the second detection circuit 1240 through the optical transmission is received.

The circuit switching module 1226 is configured to: if a detection result of the feedback detection module 1224 is that the second predetermined signal fed back by the second detection circuit 1240 through the optical transmission is received, switch a resistor network connected to two terminals of the PCI-E transmit end separately from an OFF state into an ON state, so that the resistor network and capacitors at the two terminals of the transmit end form an equivalent resistor-capacitor RC charging circuit, and then the PCI-E transmit end determines, according to the equivalent RC charging circuit, that the PCI-E receive end is in position.

Both the first predetermined signal and the second predetermined signal are differential signals, and the optical transmission may be implemented by using both an optical module and an optical fiber or using an optical fiber. Specifically, when the first detection circuit 1220 is integrated into the first optical module, the optical transmission may be implemented through the optical fiber; when the first detection circuit 1220 is integrated between the first optical module and the PCI-E transmit end, the optical transmission may be implemented through the optical module and the optical fiber. The "optical fiber" described herein includes an optical fiber between the first optical module and the second optical module or a newly disposed optical fiber.

The second detection circuit 1240 includes a signal receive module 1242, an in-position detection module 1244, and a signal feedback module 1246.

The signal receive module 1242 is configured to receive the first predetermined signal transmitted by the first detection circuit 1220 through the optical transmission.

The in-position detection module 1244 is configured to: after the signal receive module 1244 receives the first predetermined signal, detect, by using an electrical connection, whether a PCI-E receive end is in position.

The signal feedback module 1246 is configured to: if the in-position detection module 1244 detects that the PCI-E receive end is in position, feed back the second predetermined signal through the optical transmission, so that the first detection circuit 1220 determines, according to the second predetermined signal, to switch the resistor network connected to the two terminals of the PCI-E transmit end separately from the OFF state into the ON state, the resistor network and the capacitors at the two terminals of the PCI-E transmit end form the equivalent RC charging circuit, and then the PCI-E transmit end determines, according to the equivalent RC charging circuit, that the PCI-E receive end is in position.

Specifically, when the second detection circuit 1240 is integrated into the second optical module, the optical transmission may be implemented through the optical fiber; when the second detection circuit 1240 is integrated between the second optical module and the PCI-E receive end, the optical transmission may be implemented through the optical module and the optical fiber. The "optical fiber" described herein includes the optical fiber between the first optical module and the second optical module or the newly disposed optical fiber.

In conclusion, in the bus system provided by this embodiment, PCI-E receive end detection is implemented by a second detection circuit and a PCI-E receive end by using an electrical connection, the second detection circuit and a first detection circuit communicate with each other through optical transmission, and a resistor network in the first detection circuit and capacitors at two terminals of a PCI-E transmit end form an equivalent RC charging circuit, so that the PCI-E transmit end detects that the PCI-E receive end is in position. This resolves a problem that receive end detection cannot be implemented by using a conventional method in a PCI-E bus that supports optical transmission, and achieves an effect that receive end detection can also be implemented in a PCI-E bus that supports optical transmission.

Referring to FIG. 13, FIG. 13 shows a structural block diagram of a bus system provided by another embodiment of the present invention. This embodiment is described mainly by using an example that the bus system is a PCI-E bus system shown in FIG. 5A or FIG. 5B. As a more preferable embodiment provided based on the embodiment shown in FIG. 12, the bus system includes a first detection circuit 1220 and a second detection circuit 1240.

The first detection circuit 1220 may be integrated into a first optical module or between the first optical module and a PCI-E transmit end.

The second detection circuit 1240 may be integrated into a second optical module or between the second optical module and a PCI-E receive end.

The first detection circuit 1220 and the second detection circuit 1240 may exchange signals with each other through optical transmission. The first detection circuit 1220 includes a transmit end detection module 1221, a signal transmit module 1222, a feedback detection module 1224, and a circuit switching module 1226.

The transmit end detection module 1221 is configured to detect, by using an electrical connection, whether the PCI-E transmit end is performing PCI-E receive end detection. Specifically, the transmit end detection module 1221 is specifically configured to detect whether an amplitude of a differential signal output by two terminals of the PCI-E transmit end is less than a first threshold, and whether a positive transition, an amplitude of which is greater than a second threshold, exists in a common-mode voltage output by the two terminals within a predetermined time period.

The signal transmit module 1222 is configured to transmit a first predetermined signal to the second detection circuit 1240 through the optical transmission if the transmit end detection module 1221 detects that the PCI-E transmit end is performing the PCI-E receive end detection, so that after receiving the first predetermined signal, the second detection circuit 1240 detects, by using an electrical connection, whether the PCI-E receive end is in position, and feed back a second predetermined signal through the optical transmission if it is detected that the PCI-E receive end is in position.

The feedback detection module 1224 is configured to detect whether the second predetermined signal fed back by the second detection circuit 1240 through the optical transmission is received.

The circuit switching module 1226 is configured to: if a detection result of the feedback detection module 1224 is that the second predetermined signal fed back by the second detection circuit 1240 through the optical transmission is received, switch a resistor network connected to the two terminals of the PCI-E transmit end separately from an OFF state into an ON state, so that the resistor network and capacitors at the two terminals of the transmit end form an equivalent RC charging circuit, and then the PCI-E transmit end determines, according to the equivalent RC charging circuit, that the PCI-E receive end is in position.

The circuit switching module 1226 is further configured to switch the resistor network connected to the two terminals of the PCI-E transmit end 1240 separately from the ON state back into the OFF state after a predetermined time period starting from a time point when the resistor network switches from the OFF state into the ON state.

Both the first predetermined signal and the second predetermined signal are differential signals, and the optical transmission may be implemented by using both an optical module and an optical fiber or using an optical fiber. Specifically, when the first detection circuit 1220 is integrated into the first optical module, the optical transmission may be implemented through the optical fiber; and when the first detection circuit 1220 is integrated between the first optical module and the PCI-E transmit end, the optical transmission includes the optical module and the optical fiber. The "optical fiber" described herein may be implemented by using an optical fiber between the first optical module and the second optical module or a newly disposed optical fiber.

The second detection circuit 1240 includes a signal receive module 1242, an in-position detection module 1244, and a signal feedback module 1246.

The signal receive module 1242 is configured to receive the first predetermined signal transmitted by the first detection circuit 1220 through the optical transmission.

The in-position detection module 1244 is configured to: after the signal receive module 1242 receives the first predetermined signal, detect, by using an electrical connection, whether the PCI-E receive end is in position. Specifically, the in-position detection module 1244 includes a common-mode transmitting unit 1244a and a time detecting unit 1244b.

The common-mode transmitting unit 1244a is configured to transmit a common-mode voltage by using two terminals connected to the PCI-E receive end, where the common-mode voltage is higher than an initial voltage.

The time detecting unit 1244b is configured to detect whether a time duration for a voltage across the two terminals connected to the PCI-E receive end to rise from the initial voltage to the common-mode voltage transmitted by the common-mode transmitting unit 1244a is greater than a predetermined threshold.

The signal feedback module 1246 is configured to: if the in-position detection module 1244 detects that the PCI-E receive end is in position, feed back the second predetermined signal through the optical transmission, so that the first detection circuit 1220 determines, according to the second predetermined signal, to switch the resistor network connected to the two terminals of the PCI-E transmit end separately from the OFF state into the ON state, the resistor network and the capacitors at the two terminals of the PCI-E transmit end form the equivalent RC charging circuit, and then the PCI-E transmit end detects, according to the equivalent RC charging circuit, that the PCI-E receive end is in position.

Specifically, when the second detection circuit 1240 is integrated into the second optical module, the optical transmission may be implemented through the optical fiber; and when the second detection circuit 1240 is integrated between the second optical module and the PCI-E receive end, the optical transmission may be implemented through the optical module and the optical fiber. The "optical fiber" described herein includes the optical fiber between the first optical module and the second optical module or the newly disposed optical fiber.

In conclusion, in the bus system provided by this embodiment, PCI-E receive end detection is implemented by a second detection circuit and a PCI-E receive end by using an electrical connection, the second detection circuit and a first detection circuit communicate with each other through optical transmission, and a resistor network in the first detection circuit and capacitors at two terminals of a PCI-E transmit end form an equivalent RC charging circuit, so that the PCI-E transmit end detects that the PCI-E receive end is in position. This resolves a problem that receive end detection cannot be implemented by using a conventional method in a PCI-E bus that supports optical transmission, and achieves an effect that receive end detection can also be implemented in a PCI-E bus that supports optical transmission. Furthermore, the subsequent steps are not triggered until the first detection circuit detects that the transmit end is performing the receive end detection, so that maximum compatibility with an existing detection mechanism can be achieved.

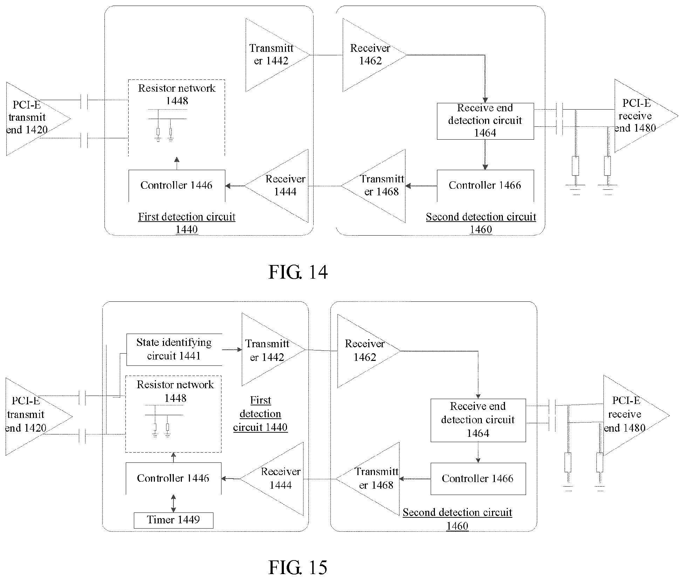

Referring to FIG. 14, FIG. 14 shows a schematic structural diagram of a bus system provided by one embodiment of the present invention. This embodiment is described mainly by using an example that the bus system is a PCI-E bus system shown in FIG. 5A or FIG. 5B. The bus system includes a transmit end 1420, a first detection circuit 1440, a second detection circuit 1460 and a receive end 1480.

The first detection circuit 1440 may be integrated into a first optical module or between the first optical module and the PCI-E transmit end 1420.

The second detection circuit 1460 may be integrated into a second optical module or between the second optical module and the PCI-E receive end 1480.

The first detection circuit 1440 and the second detection circuit 1460 may exchange signals with each other through optical transmission.

The first detection circuit 1440 includes a transmitter 1442, a receiver 1444, a controller 1446, and a resistor network 1448.

The transmitter 1442 is configured to transmit a first predetermined signal to the second detection circuit 1460 through optical transmission, so that after receiving the first predetermined signal, the second detection circuit 1460 detects, by using an electrical connection, whether the PCI-E receive end 1480 is in position; and feed back a second predetermined signal through the optical transmission if it is detected that the PCI-E receive end is in position.

The controller 1446 is configured to detect whether the receiver 1444 receives the second predetermined signal fed back by the second detection circuit 1460 through the optical transmission.

The controller 1446 is further configured to: if a detection result is that the receiver 1444 receives the second predetermined signal fed back by the second detection circuit through the optical transmission, switch the resistor network connected to two terminals of a PCI-E transmit end 1420 separately from an OFF state into an ON state, so that the resistor network 1448 and capacitors at the two terminals of the PCI-E transmit end 1420 form an equivalent RC charging circuit, and then the PCI-E transmit end 1420 determines, according to the equivalent RC charging circuit, that the PCI-E receive end 1480 is in position.

Both the first predetermined signal and the second predetermined signal are differential signals, and the optical transmission may be implemented by using both an optical module and an optical fiber or using an optical fiber. Specifically, when the first detection circuit 1420 is integrated into the first optical module, the optical transmission may be implemented through the optical fiber; and when the first detection circuit 1420 is integrated between the first optical module and the PCI-E transmit end, the optical transmission may be implemented through the optical module and the optical fiber. The "optical fiber" described herein includes an optical fiber between the first optical module and the second optical module or a newly disposed optical fiber.

The second detection circuit 1460 includes a receiver 1462, a receive end detection circuit 1464, a controller 1466, and a transmitter 1468.

The receiver 1462 is configured to receive the first predetermined signal transmitted by the first detection circuit 1440 through the optical transmission.

The receive end detection circuit 1464 is configured to detect, by using an electrical connection, whether the PCI-E receive end 1480 is in position after the receiver 1462 receives the first predetermined signal.

The controller 1466 is configured to: if the receive end detection circuit 1464 detects that the PCI-E receive end 1480 is in position, control the transmitter 1468 to feed back, through the optical transmission, the second predetermined signal, so that the first detection circuit 1440 switches, according to the second predetermined signal, the resistor network 1448 connected to the two terminals of the PCI-E transmit end 1420 separately from the OFF state into the ON state, the resistor network 1448 and the capacitors at the two terminals of the PCI-E transmit end 1420 form the equivalent RC charging circuit, and then the PCI-E transmit end 1420 determines, according to the equivalent RC charging circuit, that the receive end 1480 is in position.

Specifically, when the second detection circuit 1440 is integrated into the second optical module, the optical transmission may be implemented through the optical fiber; and when the second detection circuit 1440 is integrated between the second optical module and the PCI-E receive end, the optical transmission may be implemented through the optical module and the optical fiber. The "optical fiber" described herein includes the optical fiber between the first optical module and the second optical module or the newly disposed optical fiber.

In conclusion, in the bus system provided by this embodiment, PCI-E receive end detection is implemented by a second detection circuit and a PCI-E receive end by using an electrical connection, the second detection circuit and a first detection circuit communicate with each other through optical transmission, and a resistor network in the first detection circuit and capacitors at two terminals of a PCI-E transmit end form an equivalent RC charging circuit, so that the PCI-E transmit end detects that the PCI-E receive end is in position. This resolves a problem that receive end detection cannot be implemented by using a conventional method in a PCI-E bus that supports optical transmission, and achieves an effect that receive end detection can also be implemented in a PCI-E bus that supports optical transmission.

Referring to FIG. 15, FIG. 15 shows a schematic structural diagram of a bus system provided by another embodiment of the present invention. This embodiment is described mainly by using an example that the bus system is a PCI-E bus system shown in FIG. 5A or FIG. 5B. As a more preferable embodiment provided based on the embodiment shown in FIG. 14, the bus system includes a transmit end 1420, a first detection circuit 1440, a second detection circuit 1460, and a receive end 1480.

The first detection circuit 1440 may be integrated into a first optical module or between the first optical module and the PCI-E transmit end 1420.

The second detection circuit 1460 may be integrated into a second optical module or between the second optical module and the PCI-E receive end 1480.

The first detection circuit 1440 and the second detection circuit 1460 may exchange signals with each other through optical transmission.

The first detection circuit 1440 includes a state identifying circuit 1441, a transmitter 1442, a receiver 1444, a controller 1446, a resistor network 1448, and a timer 1449.

The state identifying circuit 1441 is configured to detect, by using an electrical connection, whether the PCI-E transmit end 1420 is performing PCI-E receive end detection. Specifically, the state identifying circuit 1441 is specifically configured to detect whether an amplitude of a differential signal output by two terminals of the PCI-E transmit end 1420 is less than a first threshold, and whether a positive transition, an amplitude of which is greater than a second threshold, exists in a common-mode voltage output by the two terminals within a predetermined time period.

The transmitter 1442 is configured to: if the state identifying circuit 1441 detects that the PCI-E transmit end 1420 is performing the PCI-E receive end detection, transmit a first predetermined signal to the second detection circuit 1460 through optical transmission, so that after receiving the first predetermined signal, the second detection circuit 1460 detects, by using an electrical connection, whether the PCI-E receive end 1480 is in position; and feeds back a second predetermined signal through the optical transmission if it is detected that the PCI-E receive end is in position.

The controller 1446 is configured to detect whether the receiver 1444 receives the second predetermined signal fed back by the second detection circuit 1460 through the optical transmission.

The controller 1446 is further configured to: if a detection result is that the receiver 1444 receives the second predetermined signal fed back by the second detection circuit 1460 through the optical transmission, switch the resistor network 1448 connected to the two terminals of the PCI-E transmit end 1420 separately from an OFF state into an ON state, so that the resistor network 1448 and capacitors at the two terminals of the PCI-E transmit end 1420 form an equivalent RC charging circuit, and then the PCI-E transmit end 1420 determines, according to the equivalent RC charging circuit, that the PCI-E receive end 1480 is in position.

The timer 1449 is configured to time a predetermined time period after the controller 1446 switches the resistor network connected to the two terminals of the PCI-E transmit end 1420 separately from the OFF state into the ON state.

The controller 1446 is further configured to switch the resistor network 1448 connected to the two terminals of the PCI-E transmit end 1420 separately from the ON state back into the OFF state after the predetermined time period timed by the timer 1449.

Both the first predetermined signal and the second predetermined signal are differential signals, and the optical transmission may be implemented by using both an optical module and an optical fiber or using an optical fiber. Specifically, when the first detection circuit 1420 is integrated into the first optical module, the optical transmission may be implemented through the optical fiber; and when the first detection circuit 1420 is integrated between the first optical module and the PCI-E transmit end, the optical transmission may be implemented through the optical module and the optical fiber. The "optical fiber" described herein includes an optical fiber between the first optical module and the second optical module or a newly disposed optical fiber.

The second detection circuit 1460 includes a receiver 1462, a receive end detection circuit 1464, a controller 1466, and a transmitter 1468.

The receiver 1462 is configured to receive the first predetermined signal transmitted by the first detection circuit 1440.

The receive end detection circuit 1464 is configured to detect whether the receive end 1480 is in position after the receiver 1462 receives the first predetermined signal. Specifically, the receive end detection circuit 1464 includes a common-mode transmitter sub-circuit 1464a and a time detection sub-circuit 1464b;

The common-mode transmitter sub-circuit 1464a is configured to transmit a common-mode voltage by using two terminals connected to the receive end 1480, where the common-mode voltage is higher than an initial voltage.

The time detection sub-circuit 1464b is configured to detect whether a time duration for a voltage across the two terminals connected to the receive end 1480 to rise from the initial voltage to the common-mode voltage transmitted by the common-mode transmitter sub-circuit 1464a is greater than a predetermined threshold.

The controller 1466 is configured to: if the receive end detection circuit 1464 detects that the receive end 1480 is in position, control the transmitter 1468 to feed back the second predetermined signal, so that the first detection circuit 1440 detects whether the second predetermined signal is received; if a detection result is that the second predetermined signal is received, the resistor network 1448 connected to the two terminals of the transmit end 1420 separately switches from the OFF state into the ON state, so that the resistor network 1448 and the capacitors at the two terminals of the transmit end 1420 form the equivalent RC charging circuit, and then the transmit end 1420 determines, according to the equivalent RC charging circuit, that the receive end 1480 is in position.

Specifically, when the second detection circuit 1440 is integrated into the second optical module, the optical transmission may be implemented through the optical fiber; and when the second detection circuit 1440 is integrated between the second optical module and the PCI-E receive end, the optical transmission may be implemented through the optical module and the optical fiber. The "optical fiber" described herein includes the optical fiber between the first optical module and the second optical module or the newly disposed optical fiber.

In conclusion, in the bus system provided by this embodiment, PCI-E receive end detection is implemented by a second detection circuit and a PCI-E receive end by using an electrical connection, the second detection circuit and a first detection circuit communicate with each other through optical transmission, and a resistor network in the first detection circuit and capacitors at two terminals of a PCI-E transmit end form an equivalent RC charging circuit, so that the PCI-E transmit end detects that the PCI-E receive end is in position. This resolves a problem that receive end detection cannot be implemented by using a conventional method in a PCI-E bus that supports optical transmission, and achieves an effect that receive end detection can also be implemented in a PCI-E bus that supports optical transmission. Furthermore, the subsequent steps are not triggered until the first detection circuit detects that the transmit end is performing the receive end detection, so that maximum compatibility with an existing detection mechanism can be achieved.

It should be continuously noted that, in an implementation environment of integrating the first detection circuit and the second detection circuit into the optical module, because optical fiber communication is bidirectional and two communication ends may be a transmit end and a receive end, usually both the first detection circuit and the second detection circuit are integrated into each optical module. For more details, reference may be made to the following embodiment.

Referring to FIG. 16, FIG. 16 shows a schematic structural diagram of an optical module provided by still another embodiment of the present invention. The optical module may be a first optical module or a second optical module, and both a first detection circuit and a second detection circuit are integrated into the optical module. The optical module includes:
a receive end detection circuit 161, a controller 162, a state identifying circuit 163, a timer 164, a resistor network 165, an amplifier 166, a photodiode array 167, a laser emitting driver 168, and a laser array 169.

The amplifier 166 may be a TIA/LA (Trans-impedance amplifier/Limiting amplifier, trans-impedance amplifier/limiting amplifier). The photodiode array 167 may be a PIN Array (Photodiode Array, photodiode array). The laser emitting driver 168 may be a VCSEL Driver (Vertical Cavity Surface Emitting Laser Driver, vertical cavity surface emitting laser driver). The laser array 169 may be a VCSEL Array (Vertical Cavity Surface Emitting Laser Array, vertical cavity surface emitting laser array).

On the one hand, when the optical module serves as an optical module connected to the PCI-E transmit end, the integrated first detection circuit is used. In this case, the state identifying circuit 163 corresponds to the state identifying circuit 1421 of the previous embodiment; the laser emitting driver 168 and the laser array 169 correspond to the transmitter 1442 of the previous embodiment; the amplifier 166 and the photodiode array 167 correspond to the receiver 1444 of the previous embodiment; the controller 164 corresponds to the controller 1446 of the previous embodiment; the resistor network 165 corresponds to the resistor network 1448 of the previous embodiment; and the timer 164 corresponds to the timer 1449 of the previous embodiment. Specific processes may make reference to the previous embodiment.

On the other hand, when the optical module serves as an optical module connected to the PCI-E receive end, the integrated second detection circuit is used. In this case, the amplifier 166 and the photodiode array 167 correspond to the receiver 1462 of the previous embodiment; the receive end detection circuit 161 corresponds to the receive end detection circuit 1464 of the previous embodiment; the controller 164 corresponds to the controller 1466 of the previous embodiment; and the laser emitting driver 168 and the laser array 169 correspond to the transmitter 1468 of the previous embodiment.

In conclusion, both a first detection circuit and a second detection circuit provided in the above embodiments are integrated into an optical module provided by this embodiment. This resolves a problem that receive end detection cannot be implemented by using a conventional method in a PCI-E bus that supports optical transmission, and achieves an effect that receive end detection can also be implemented in a PCI-E bus that supports optical transmission. Furthermore, the subsequent steps are not triggered until the first detection circuit detects that the transmit end is performing the receive end detection, so that maximum compatibility with an existing detection mechanism can be achieved.

A person of ordinary skill in the art may understand that all or a part of the steps of the embodiments may be implemented by hardware or a program instructing relevant hardware. The program may be stored in a computer readable storage medium. The storage medium may include: a read-only memory, a magnetic disk, or an optical disc.

The foregoing descriptions are merely exemplary embodiments of the present invention, but are not intended to limit the present invention.

## Claims

1. A method for detecting a receive end, wherein the method comprises:
detecting (702), by using an electrical connection, whether a Peripheral Component Interconnect Express, PCI-E, transmit end (1420) is performing PCI-E receive end detection;
transmitting (602, 704), by a first detection circuit (1440), a first predetermined signal to a second detection circuit (1460) through optical transmission if it is detected that the PCI-E transmit end (1420) is performing the PCI-E receive end detection so that the second detection circuit (1460) detects, after receiving the first predetermined signal and by using an electrical connection, whether a PCI-E receive end (1480) is in position, and feeds back a second predetermined signal through the optical transmission if it is detected that the PCI-E receive end (1480) is in position;
detecting (608, 710), by the first detection circuit (1440), whether the second predetermined signal fed back by the second detection circuit (1460) through the optical transmission is received; and
if a detection result is that the second predetermined signal fed back by the second detection circuit (1460) through the optical transmission is received, switching (610, 712) a resistor network (1448) connected to two terminals of the PCI-E transmit end (1420) separately from an OFF state into an ON state, so that the resistor network (1448) and capacitors at the two terminals of the PCI-E transmit end (1420) form an equivalent resistor-capacitor, RC, charging circuit, and then the PCI-E transmit end (1420) determines, according to the equivalent RC charging circuit, that the PCI-E receive end (1480) is in position;
wherein both the first predetermined signal and the second predetermined signal are differential signals.

2. The method according to claim 1, wherein the step of detecting, by using an electrical connection, whether the PCI-E transmit end (1420) is performing PCI-E receive end (1480) detection comprises:
detecting whether an amplitude of a differential signal output by the two terminals of the PCI-E transmit end (1420) is less than a first threshold, and whether a positive transition, an amplitude of which is greater than a second threshold, exists in a common-mode voltage output by the two terminals within a predetermined time period.

3. The method according to claim 1 or 2, wherein after the step of switching a resistor network (1448) connected to two terminals of a PCI-E transmit end (1420) separately switches from an OFF state into an ON state, the method further comprises:
switching (714) the resistor network (1448) connected to the two terminals of the PCI-E transmit end (1420) separately from the ON state back into the OFF state after a predetermined time period starting from a time point when the resistor network (1448) switches from the OFF state into the ON state.

4. A first detection circuit (1440), wherein the first detection circuit (1440) comprises:
a state identifying circuit (1441), a transmitter(1442), a receiver (1444), a controller(1446), and a resistor network (1448), wherein:
the state identifying circuit (1441) is configured to detect, by using an electrical connection, whether a Peripheral Component Interconnect Express, PCI-E, transmit end (1420) is performing receive end detection;
the transmitter (1442) is configured to transmit a first predetermined signal to a second detection circuit (1460) through optical transmission if the state identifying circuit (1441) detects that the PCI-E transmit end (1420) is performing the PCI-E receive end detection, so that the second detection circuit (1460) detects, after receiving the first predetermined signal and by using an electrical connection, whether a PCI-E receive end (1480) is in position, and feeds back a second predetermined signal through the optical transmission if it is detected that the PCI-E receive end (1480) is in position;
the controller (1446) is configured to detect whether the receiver (1444) receives the second predetermined signal fed back by the second detection circuit (1460) through the optical transmission; and
the controller (1446) is further configured to: if a detection result is that the receiver receives the second predetermined signal fed back by the second detection circuit (1460) through the optical transmission, switch a resistor network (1448) connected to two terminals of a PCI-E transmit end (1420) separately from an OFF state into an ON state, so that the resistor network (1448) and capacitors at the two terminals of the PCI-E transmit end (1420) form an equivalent resistor-capacitor, RC, charging circuit, and then the PCI-E transmit end (1420) determines, according to the equivalent RC charging circuit, that the PCI-E receive end (1480) is in position;
wherein both the first predetermined signal and the second predetermined signal are differential signals.

5. A second detection circuit (1460), wherein the circuit (1460) comprises:
a receiver (1462), a receive end detection circuit (1464), a controller (1466), and a transmitter (1468), wherein:
the receiver (1462) is configured to receive a first predetermined signal transmitted by a first detection circuit (1440) through optical transmission;
the receive end detection circuit (1464) is configured to: after the receiver (1462) receives the first predetermined signal, detect, by using an electrical connection, whether a Peripheral Component Interconnect Express, PCI-E, receive end (1480) is in position; and
the controller (1466) is configured to: if the receive end detection circuit (1464) detects that the PCI-E receive end (1480) is in position, control the transmitter (1468) to feed back a second predetermined signal through the optical transmission, so that the first detection circuit (1440) determines, according to the second predetermined signal, to switch a resistor network (1448) connected to two terminals of a PCI-E transmit end (1420) separately from an OFF state into an ON state, the resistor network (1420) and capacitors at the two terminals of the PCI-E transmit end (1420) form an equivalent resistor-capacitor, RC, charging circuit, and then the PCI-E transmit end (1420) determines, according to the equivalent RC charging circuit, that the PCI-E receive end is in position;
wherein both the first predetermined signal and the second predetermined signal are differential signals.

6. The second detection circuit according to claim 5, wherein the receive end detection circuit(1464) comprises:
a common-mode transmitter sub-circuit and a time detection sub-circuit, wherein:
the common-mode transmitter sub-circuit is configured to transmit a common-mode voltage by using two terminals connected to the PCI-E receive end after the , wherein the common-mode voltage is higher than an initial voltage; and
the time detection sub-circuit is configured to detect whether a time duration for a voltage across the two terminals connected to the PCI-E receive end to rise from the initial voltage to the common-mode voltage transmitted by the common-mode transmitter sub-circuit is greater than a predetermined threshold.

7. A bus system, comprising a transmit end (522), a first detection circuit (542) connected to the transmit end (522), a first optical module (540) connected to the first detection circuit (542), a second optical module (560) connected to the first optical module (540) by using an optical cable, a second detection circuit (562) connected to the second optical module (560), and a receive end (580) connected to the second detection circuit (562);
wherein the first detection circuit (542) is the first detection circuit (1440) according to claim4; and
the second detection circuit (562) is the second detection circuit (1460) according to claim 5 or 6.

8. A bus system, comprising a transmit end (520), a first optical module (540) connected to the transmit end (522), a second optical module (560) connected to the first optical module by using an optical cable, and a receive end connected to the second optical module; wherein:
the first detection circuit (1440) according to claim 4 is integrated into the first optical module (540); and
the second detection circuit (1460) according to claim 5 or 6 is integrated into the second optical module (560).

## Patentansprüche

1. Verfahren zum Detektieren einer Empfangsseite, wobei das Verfahren Folgendes umfasst:
Detektieren (702) durch Verwenden einer elektrischen Verbindung, ob eine "Peripheral Component Interconnect Express"- bzw. PCI-E-Sendeseite (1420) eine PCI-E-Empfangsseitendetektion durchführt;
Übertragen (602, 704) eines ersten vorbestimmten Signals durch einen ersten Detektionsschaltkreis (1440) über optische Übertragung an einen zweiten Detektionsschaltkreis (1460), falls detektiert wird, dass die PCI-E-Sendeseite (1420) die PCI-E-Empfangsseitendetektion durchführt, so dass der zweite Detektionsschaltkreis (1460) nach dem Empfangen des ersten vorbestimmten Signals und durch Verwenden einer elektrischen Verbindung detektiert, ob sich eine PCI-E-Empfangsseite (1480) in Position befindet, und ein zweites vorbestimmtes Signal über die optische Übertragung zurückschickt, falls detektiert wird, dass sich die PCI-E-Empfangsseite (1480) in Position befindet;
Detektieren (608, 710) durch den ersten Detektionsschaltkreis (1440), ob das zweite vorbestimmte Signal, das durch den zweiten Detektionsschaltkreis (1460) über die optische Übertragung zurückgeschickt wurde, empfangen wird; und
falls ein Detektionsergebnis ist, dass das zweite vorbestimmte Signal, das durch den zweiten Detektionsschaltkreis (1460) über die optische Übertragung zurückgeschickt wurde, empfangen wird, Schalten (610, 712) eines Widerstandsnetzes (1448), das getrennt mit zwei Anschlüssen der PCI-E-Sendeseite (1420) verbunden ist, von einem AUS-Zustand in einen EIN-Zustand, so dass das Widerstandsnetz (1448) und Kondensatoren an den zwei Anschlüssen der PCI-E-Sendeseite (1420) einen äquivalenten Widerstand-Kondensator- bzw. RC-Ladeschaltkreis bilden und so dass dann die PCI-E-Sendeseite (1420) gemäß dem äquivalenten RC-Ladeschaltkreis bestimmt, dass sich die PCI-E-Empfangsseite (1480) in Position befindet;
wobei sowohl das erste vorbestimmte Signal als auch das zweite vorbestimmte Signal differenzielle Signale sind.

2. Verfahren nach Anspruch 1, wobei der Schritt des Detektierens durch Verwenden einer elektrischen Verbindung, ob die PCI-E-Sendeseite (1420) eine PCI-E-Empfangsseiten(1480)-Detektion durchführt, Folgendes umfasst:
Detektieren, ob eine Amplitude eines differenziellen Signals, das durch die zwei Anschlüsse der PCI-E-Sendeseite (1420) ausgegeben wird, kleiner als eine erste Schwelle ist, und ob ein positiver Übergang, dessen Amplitude größer als eine zweite Schwelle ist, in einer Gleichtaktspannung, die durch die zwei Anschlüsse ausgegeben wird, innerhalb einer vorbestimmten Zeitdauer existiert.

3. Verfahren nach Anspruch 1 oder 2, wobei das Verfahren nach dem Schritt des Schaltens eines Widerstandsnetzes (1448), das getrennt mit zwei Anschlüssen einer PCI-E-Sendeseite (1420) verbunden ist, von einem AUS-Zustand in einen EIN-Zustand ferner Folgendes umfasst:
Schalten (714) des Widerstandsnetzes (1448), das getrennt mit den zwei Anschlüssen der PCI-E-Sendeseite (1420) verbunden ist, nach einer vorbestimmten Zeitdauer, die zu einem Zeitpunkt beginnt, wenn das Widerstandsnetz (1448) von dem AUS-Zustand in den EIN-Zustand schaltet, von dem EIN-Zustand zurück in den AUS-Zustand.

4. Erster Detektionsschaltkreis (1440), wobei der erste Detektionsschaltkreis (1440) Folgendes umfasst:
einen Zustandsidentifizierungsschaltkreis (1441), einen Sender (1442), einen Empfänger (1444), eine Steuerung (1446) und ein Widerstandsnetz (1448), wobei:
der Zustandsidentifizierungsschaltkreis (1441) zum Detektieren, ob eine "Peripheral Component Interconnect Express"- bzw. PCI-E-Sendeseite (1420) eine Empfangsseitendetektion durchführt, durch Verwenden einer elektrischen Verbindung konfiguriert ist;
der Sender (1442) zum Übertragen eines ersten vorbestimmten Signals über optische Übertragung an einen zweiten Detektionsschaltkreis (1460), falls der Zustandsidentifizierungsschaltkreis (1441) detektiert, dass die PCI-E-Sendeseite (1420) die PCI-E-Empfangsseitendetektion durchführt, konfiguriert ist, so dass der zweite Detektionsschaltkreis (1460) nach dem Empfangen des ersten vorbestimmten Signals und durch Verwenden einer elektrischen Verbindung detektiert, ob sich eine PCI-E-Empfangsseite (1480) in Position befindet, und ein zweites vorbestimmtes Signal über die optische Übertragung zurückschickt, falls detektiert wird, dass sich die PCI-E-Empfangsseite (1480) in Position befindet;
die Steuerung (1446) zum Detektieren konfiguriert ist, ob der Empfänger (1444) das zweite vorbestimmte Signal, das durch den zweiten Detektionsschaltkreis (1460) über die optische Übertragung zurückgeschickt wurde, empfängt; und
die Steuerung (1446) ferner zu Folgendem konfiguriert ist: falls ein Detektionsergebnis ist, dass der Empfänger das zweite vorbestimmte Signal, das durch den zweiten Detektionsschaltkreis (1460) über die optische Übertragung zurückgeschickt wurde, empfängt, Schalten eines Widerstandsnetzes (1448), das getrennt mit zwei Anschlüssen einer PCI-E-Sendeseite (1420) verbunden ist, von einem AUS-Zustand in einen EIN-Zustand, so dass das Widerstandsnetz (1448) und Kondensatoren an den zwei Anschlüssen der PCI-E-Sendeseite (1420) einen äquivalenten Widerstand-Kondensator- bzw. RC-Ladeschaltkreis bilden und so dass dann die PCI-E-Sendeseite (1420) gemäß dem äquivalenten RC-Ladeschaltkreis bestimmt, dass sich die PCI-E-Empfangsseite (1480) in Position befindet;
wobei sowohl das erste vorbestimmte Signal als auch das zweite vorbestimmte Signal differenzielle Signale sind.

5. Zweiter Detektionsschaltkreis (1460), wobei der Schaltkreis (1460) Folgendes umfasst:
einen Empfänger (1462), einen Empfangsseitendetektionsschaltkreis (1464), eine Steuerung (1466) und einen Sender (1468), wobei:
der Empfänger (1462) zum Empfangen eines ersten vorbestimmten Signals, das durch einen ersten Detektionsschaltkreis (1440) über optische Übertragung übertragen wird, konfiguriert ist;
der Empfangsseitendetektionsschaltkreis (1464) zu Folgendem konfiguriert ist: nachdem der Empfänger (1462) das erste vorbestimmte Signal empfangen hat, Detektieren durch Verwenden einer elektrischen Verbindung, ob sich eine "Peripheral Component Interconnect Express"- bzw. PCI-E-Empfangsseite (1480) in Position befindet; und
die Steuerung (1466) zu Folgendem konfiguriert ist: falls der Empfangsseitendetektionsschaltkreis (1464) detektiert, dass sich die PCI-E-Empfangsseite (1480) in Position befindet, Steuern des Senders (1468) dazu, ein zweites vorbestimmtes Signal über die optische Übertragung zurückzuschicken, so dass der erste Detektionsschaltkreis (1440) gemäß dem zweiten vorbestimmten Signal bestimmt, ein Widerstandsnetz (1448), das getrennt mit zwei Anschlüssen einer PCI-E-Sendeseite (1420) verbunden ist, von einem AUS-Zustand in einen EIN-Zustand umzuschalten, so dass das Widerstandsnetz (1420) und Kondensatoren an den zwei Anschlüssen der PCI-E-Sendeseite (1420) einen äquivalenten Widerstand-Kondensator- bzw. RC-Ladeschaltkreis bilden und so dass dann die PCI-E-Sendeseite (1420) gemäß dem äquivalenten RC-Ladeschaltkreis bestimmt, dass sich die PCI-E-Empfangsseite in Position befindet;
wobei sowohl das erste vorbestimmte Signal als auch das zweite vorbestimmte Signal differenzielle Signale sind.

6. Zweiter Detektionsschaltkreis nach Anspruch 5, wobei der Empfangsseitendetektionsschaltkreis (1464) Folgendes umfasst:
einen Gleichtaktsenderteilschaltkreis und einen Zeitdetektionsteilschaltkreis, wobei:
der Gleichtaktsenderteilschaltkreis zum Übertragen einer Gleichtaktspannung durch Verwenden von zwei Anschlüssen, die mit der PCI-E-Empfangsseite verbunden sind, nach dem konfiguriert ist, wobei die Gleichtaktspannung höher als eine ursprüngliche Spannung ist; und
der Zeitdetektionsteilschalkreis zum Detektieren, ob eine Zeitdauer für einen Anstieg einer Spannung über die zwei Anschlüsse, die mit der PCI-E-Empfangsseite verbunden sind, von der ursprünglichen Spannung auf die Gleichtaktspannung, die durch den Gleichtaktsenderteilschaltkreis übertragen wird, größer als eine vorbestimmte Schwelle ist, konfiguriert ist.

7. Bussystem, das eine Sendeseite (522), einen ersten Detektionsschaltkreis (542), der mit der Sendeseite (522) verbunden ist, ein erstes optisches Modul (540), das mit dem ersten Detektionsschaltkreis (542) verbunden ist, ein zweites optisches Modul (560), das durch Verwenden eines optischen Kabels mit dem ersten optischen Modul (540) verbunden ist, einen zweiten Detektionsschaltkreis (562), der mit dem zweiten optischen Modul (560) verbunden ist, und eine Empfangsseite (580), die mit dem zweiten Detektionsschaltkreis (562) verbunden ist, umfasst;
wobei der erste Detektionsschaltkreis (542) der erste Detektionsschaltkreis (1440) nach Anspruch 4 ist; und
wobei der zweite Detektionsschaltkreis (562) der zweite Detektionsschaltkreis (1460) nach Anspruch 5 oder 6 ist.

8. Bussystem, das eine Sendeseite (520), ein erstes optisches Modul (540), das mit der Sendeseite (522) verbunden ist, ein zweites optisches Modul (560), das durch Verwenden eines optischen Kabels mit dem ersten optischen Modul verbunden ist, und eine Empfangsseite, die mit dem zweiten optischen Modul verbunden ist, umfasst; wobei:
der erste Detektionsschaltkreis (1440) nach Anspruch 4 in das erste optische Modul (540) integriert ist; und
der zweite Detektionsschaltkreis (1460) nach Anspruch 5 oder 6 in das zweite optische Modul (560) integriert ist.

## Revendications

1. Procédé de détection d'une extrémité de réception, le procédé comprenant :
la détection (702), au moyen d'une connexion électrique, qu'une extrémité de transmission PCI-E (Peripheral Component Interconnect Express) (1420) effectue ou non une détection d'extrémité de réception PCI-E ;
la transmission (602, 704), par un premier circuit de détection (1440), d'un premier signal prédéterminé à un second circuit de détection (1460) par transmission optique s'il est détecté que l'extrémité de transmission PCI-E (1420) exécute une détection d'extrémité de réception PCI-E de telle sorte que le second circuit de détection (1460) détecte, après la réception du premier signal prédéterminé et au moyen d'une connexion électrique, qu'une extrémité de réception PCI-E (1480) est ou non en place, et renvoie un second signal prédéterminé par la transmission optique s'il est détecté que l'extrémité de réception PCI-E (1480) est en place ;
la détection (608, 710), par le premier circuit de détection (1440), que le second signal prédéterminé renvoyé par le second circuit de détection (1460) par la transmission optique est reçu ou non ; et
si un résultat de détection est que le second signal prédéterminé renvoyé par le second circuit de détection (1460) par la transmission optique est reçu, la commutation (610, 712) d'un réseau de résistances (1448) connecté à deux bornes de l'extrémité de transmission PCI-E (1420) séparément d'un état désactivé à un état activé, de telle sorte que le réseau de résistances (1448) et des condensateurs au niveau des deux bornes de l'extrémité de transmission PCI-E (1420) forment un circuit de charge à résistances-condensateurs, RC, équivalent, et qu'ensuite l'extrémité de transmission PCI-E (1420) détermine, conformément au circuit de charge RC équivalent, que l'extrémité de réception PCI-E (1480) est en place ;
dans lequel les deux premier signal prédéterminé et second signal prédéterminé sont des signaux différentiels.

2. Procédé selon la revendication 1, dans lequel l'étape de détection, au moyen d'une connexion électrique, que l'extrémité de transmission PCI-E (1420) effectue ou non une détection d'extrémité de réception PCI-E (1480) comprend :
la détection qu'une amplitude d'une sortie de signal différentiel par les deux bornes de l'extrémité de transmission PCI-E (1420) est inférieure ou non à un premier seuil, et qu'une transition positive, dont une amplitude est supérieure à un second seuil, existe ou non dans une sortie de tension en mode commun par les deux bornes dans une période de temps prédéterminée.

3. Procédé selon la revendication 1 ou 2, comprenant en outre, après l'étape de commutation d'un réseau de résistances (1448) connecté à deux bornes d'une extrémité de transmission PCI-E (1420) d'un état désactivé à un état activé :
la commutation (714) du réseau de résistances (1448) connecté aux deux bornes de l'extrémité de transmission PCI-E (1420) séparément de l'état activé de retour à l'état désactivé après une période de temps prédéterminée commençant à un instant de temps auquel le réseau de résistances (1448) commute de l'état désactivé à l'état activé.

4. Premier circuit de détection (1440), le premier circuit de détection (1440) comprenant
un circuit d'identification d'état (1441), un émetteur (1442), un récepteur (1444), un contrôleur (1446), et un réseau de résistances (1448), dans lequel :
le circuit d'identification d'état (1441) est configuré pour détecter, au moyen d'une connexion électrique, qu'une extrémité de transmission PCI-E (Peripheral Component Interconnect Express) (1420) effectue ou non une détection d'extrémité de réception ;
l'émetteur (1442) est configuré pour transmettre un premier signal prédéterminé à un second circuit de détection (1460) par transmission optique si le circuit d'identification d'état (1441) détecte que l'extrémité de transmission PCI-E (1420) exécute une détection d'extrémité de réception PCI-E, de telle sorte que le second circuit de détection (1460) détecte, après la réception du premier signal prédéterminé et au moyen d'une connexion électrique, qu'une extrémité de réception PCI-E (1480) est ou non en place, et renvoie un second signal prédéterminé par la transmission optique s'il est détecté que l'extrémité de réception PCI-E (1480) est en place ;
le contrôleur (1446) est configuré pour détecter que le récepteur (1444) reçoit ou non le second signal prédéterminé renvoyé par le second circuit de détection (1460) par la transmission optique ; et
le contrôleur (1446) est configuré en outre pour : si un résultat de détection est que le récepteur reçoit le second signal prédéterminé renvoyé par le second circuit de détection (1460) par la transmission optique, commuter un réseau de résistances (1448) connecté à deux bornes d'une extrémité de transmission PCI-E (1420) séparément d'un état désactivé à un état activé, de telle sorte que le réseau de résistances (1448) et des condensateurs au niveau des deux bornes de l'extrémité de transmission PCI-E (1420) forment un circuit de charge à résistances-condensateurs, RC, équivalent, et qu'ensuite l'extrémité de transmission PCI-E (1420) détermine, conformément au circuit de charge RC équivalent, que l'extrémité de réception PCI-E (1480) est en place ;
dans lequel les deux premier signal prédéterminé et second signal prédéterminé sont des signaux différentiels.

5. Second circuit de détection (1460), le circuit (1460) comprenant :
un récepteur (1462), un circuit de détection d'extrémité de réception (1464), un contrôleur (1466), et un émetteur (1468), dans lequel :
le récepteur (1462) est configuré pour recevoir un premier signal prédéterminé transmis par un premier circuit de détection (1440) par transmission optique ;
le circuit de détection d'extrémité de réception (1464) est configuré pour : après que le récepteur (1462) reçoit le premier signal prédéterminé, détecter, au moyen d'une connexion électrique, qu'une extrémité de réception PCI-E (Peripheral Component Interconnect Express) (1480) est en place ou non ; et
le contrôleur (1466) est configuré pour : si le circuit de détection d'extrémité de réception (1464) détecte que l'extrémité de réception PCI-E (1480) est en place, commander à émetteur (1468) de renvoyer un second signal prédéterminé par la transmission optique, de telle sorte que le premier circuit de détection (1440) détermine, conformément au second signal prédéterminé, qu'il convient de commuter un réseau de résistances (1448) connecté à deux bornes d'une extrémité de transmission PCI-E (1420) séparément d'un état désactivé à un état activé, le réseau de résistances (1420) et des condensateurs au niveau des deux bornes de l'extrémité de transmission PCI-E (1420) forment un circuit de charge à résistances-condensateurs, RC, équivalent, et qu'ensuite l'extrémité de transmission PCI-E (1420) détermine, conformément au circuit de charge RC équivalent, que l'extrémité de réception PCI-E est en place ;
dans lequel les deux premier signal prédéterminé et second signal prédéterminé sont des signaux différentiels.

6. Second circuit de détection selon la revendication 5, dans lequel le circuit de détection d'extrémité de réception (1464) comprend :
un sous-circuit d'émetteur en mode commun et un sous-circuit de détection de temps, dans lequel :
le sous-circuit d'émetteur en mode commun est configuré pour transmettre une tension en mode commun en utilisant deux bornes connectées à l'extrémité de réception PCI-E après le, la tension de mode commun étant supérieure à la tension initiale ; et
le sous-circuit de détection de temps est configuré pour détecter qu'une durée de temps d'une tension en travers des deux bornes connectées à l'extrémité de réception PCI-E devant augmenter de la tension initiale à la tension de mode commun transmise par le sous-circuit d'émetteur en mode commun est supérieure ou non à un seuil prédéterminé.

7. Système de bus, comprenant une extrémité de transmission (522), un premier circuit de détection (542) connecté à l'extrémité de transmission (522), un premier module optique (540) connecté au premier circuit de détection (542), un second module optique (560) connecté au premier module optique (540) au moyen d'un câble optique, un second circuit de détection (562) connecté au second module optique (560), et une extrémité de réception (580) connectée au second circuit de détection (562) ;
dans lequel le premier circuit de détection (542) est le premier circuit de détection (1440) selon la revendication 4 ; et
le second circuit de détection (562) est le second circuit de détection (1460) selon la revendication 5 ou 6.

8. Système de bus, comprenant une extrémité de transmission (520), un premier circuit optique (540) connecté à l'extrémité de transmission (522), un second module optique (560) connecté au premier module optique au moyen d'un câble optique, et une extrémité de réception connectée au second module optique, dans lequel
le premier circuit de détection (1440) selon la revendication 4 est intégré dans le premier module optique (540) ; et
le second circuit de détection (1460) selon la revendication 5 ou 6 est intégré dans le second module optique (560).
